(19) Europäisches Patentamt
European Patent Office
Office européen des brevets

(11) **EP 3 488 305 B1**

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **17743270.5**

(22) Anmeldetag: **11.07.2017**

(51) Internationale Patentklassifikation (IPC):
**G05B 19/4099** (2006.01)    **G05B 19/401** (2006.01)
**B29C 64/153** (2017.01)    **B29C 64/393** (2017.01)
**B33Y 10/00** (2015.01)    **B22F 3/105** (2006.01)
**G05B 19/418** (2006.01)    **B33Y 50/02** (2015.01)

(52) Gemeinsame Patentklassifikation (CPC):
**B29C 64/393; B29C 64/153; B33Y 10/00;**
**B33Y 50/02; G05B 19/401; G05B 19/4099;**
G05B 19/4185; Y02P 90/02

(86) Internationale Anmeldenummer:
**PCT/EP2017/067362**

(87) Internationale Veröffentlichungsnummer:
**WO 2018/019567 (01.02.2018 Gazette 2018/05)**

(54) **VERFAHREN UND VORRICHTUNG ZUR ERMITTLUNG DER BAUTEILQUALITÄT**

METHOD AND DEVICE FOR DETERMINING COMPONENT QUALITY

PROCÉDÉ ET DISPOSITIF DE DÉTERMINATION DE LA QUALITÉ D'UN COMPOSANT

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **25.07.2016 DE 102016213609**

(43) Veröffentlichungstag der Anmeldung:
**29.05.2019 Patentblatt 2019/22**

(73) Patentinhaber: **EOS GmbH Electro Optical Systems**
**82152 Krailling (DE)**

(72) Erfinder:
- **DOMRÖSE, Robert Achim**
  **82110 Germering (DE)**
- **YLANDER, Pilvi**
  **20320 Turku (FI)**
- **KAKKO, Katri**
  **20810 Turku (FI)**
- **MINET, Kevin**
  **20540 Turku (FI)**
- **SYVÄNEN, Tatu**
  **21540 Preitilä (FI)**
- **WOLF, Dominik**
  **80469 München (DE)**

(74) Vertreter: **Prüfer & Partner mbB**
**Patentanwälte · Rechtsanwälte**
**Sohnckestraße 12**
**81479 München (DE)**

(56) Entgegenhaltungen:
**EP-A1- 2 666 612**        **DE-A1-102011 009 624**
**DE-A1-102013 003 937**    **DE-U1-202010 010 771**

- **S. CLIJSTERS ET AL: "In situ quality control of the selective laser melting process using a high-speed, real-time melt pool monitoring system", THE INTERNATIONAL JOURNAL OF ADVANCED MANUFACTURING TECHNOLOGY, Bd. 75, Nr. 5-8, 10. August 2014 (2014-08-10), Seiten 1089-1101, XP55320129, London ISSN: 0268-3768, DOI: 10.1007/s00170-014-6214-8**
- **Thomas Reinhardt ET AL: "Ansätze zur Qualitätsbewertung von generativen Fertigungsverfahren durch die Einführung eines Kennzahlensystems", RTejournal, 1. Januar 2012 (2012-01-01), Seiten 1-9, XP055413604, Gefunden im Internet: URL:https://www.rtejournal.de/ausgabe9/3408/pdfversion [gefunden am 2017-10-09]**

EP 3 488 305 B1

- **TOWNSEND A ET AL: "Surface texture metrology for metal additive manufacturing: a review", PRECISION ENGINEERING, ELSEVIER, AMSTERDAM, NL, Bd. 46, 7. Juni 2016 (2016-06-07), Seiten 34-47, XP029659308, ISSN: 0141-6359, DOI: 10.1016/J.PRECISIONENG.2016.06.001**

**Beschreibung**

Die vorliegende Erfindung bezieht sich auf ein Verfahren und eine Vorrichtung zur Ermittlung der Qualität eines mittels eines generativen Schichtbauverfahrens hergestellten Objekts, insbesondere auf ein Verfahren und eine Vorrichtung zur Ermittlung eines Qualitätsindikators für selbiges Objekt.

DE 10 2013 003 937 A1 beschreibt ein Verfahren zur Beurteilung der Strukturqualität von Bauteilen, die durch ein Lasersinter- oder Laserschmelzverfahren hergestellt werden. Dabei wird der Schmelzbereich durch eine Sensorvorrichtung erfasst und daraus Sensorwerte zur Evaluierung einer Bauteilqualität hergeleitet. Insbesondere werden die ermittelten Sensorwerte in für die Strukturqualität des Bauteils kritische Werte und unkritische Werte eingeteilt und die für die Strukturqualität des Bauteils kritischen Werte abstandsbezogen auf einen im Bereich der Oberfläche des Bauteils liegenden Bezugspunkt dargestellt.

Die deutsche Gebrauchsmusterschrift DE 20 2010 010 771 U1 bezieht sich auf eine Laserschmelzvorrichtung, in der Abmessung, Form und/oder Temperatur eines Schmelzbereichs erfasst werden und aus den erfassten Sensorwerten eine Bauteilqualität abgeleitet wird. Hierzu ist in der Laserschmelzvorrichtung eine Speichereinrichtung vorhanden, in welcher die erfassten Sensorwerte zusammen mit den die Sensorwerten im Bauteil lokalisierenden Koordinatenwerten abgespeichert sind. Weiterhin ist eine Visualisierungseinrichtung vorhanden, die mit dem Speicher verbunden ist und durch welche die abgespeicherten Sensorwerte in einer zwei- oder mehrdimensionalen Darstellung bezogen auf ihren Erfassungsort im Bauteil darstellbar sind.

Der Artikel "In situ quality control of the selective laser melting process using a high-speed, real-time melt pool monitoring system" von S. Clijsters et al., veröffentlicht in THE INTERNATIONAL JOURNAL OF ADVANCED MANUFACTURING TECHNOLOGY, BD. 75, Nr. 5-8, 10. August 2014, Seiten 1089-1101, beschreibt die Verwendung eines in-situ monitoring-Systems beim selektiven Laserschmelzen (SLM). Das System beinhaltet eine optische Sensoranordnung zur Erfassung des Schmelzbads sowie ein Datenanalysesystem zum Visualisieren der erfassten Sensordaten.

EP 2 666 612 A1 beschreibt ein Verfahren zum Abbilden eines dreidimensionalen Bauteils, das mittels eines generativen Fertigungsverfahrens hergestellt wird. Das Verfahren umfasst dabei einen Schritt des Ermittelns von wenigstens zwei Schichtbildern des Bauteils während seiner Herstellung mittels einer Detektionseinrichtung, einen Schritt des Erzeugens eines dreidimensionalen Abbilds des Bauteils anhand der ermittelten Schichtbilder mittels einer Recheneinrichtung und einen Schritt des Darstellens des Abbilds mittels einer Anzeigeeinrichtung.

Thomas Reinhardt et al. beschreiben in dem Aufsatz "Ansätze zur Qualitätsbewertung von generativen Fertigungsverfahren durch die Einführung eine Kennzahlensystems" in RTejournal, Januar 2012, Seiten 1-9, die Einführung eines Kennzahlensystems, das anhand von Prüfkörpergeometrien qualifiziert wurde. Dabei werden gezielt Störgrößen eingebracht, welche zu unzulässigen Qualitätsschwankungen führen können.

Der Artikel "Surface texture metrology for metal additive manufacturing: a review" von A Townsend et al. in PRECISION ENGI-NEERING, Elsevier, Amsterdam, Bd. 46, 7. Juni 2016, Seiten 34-47 gibt einen Überblick über Analyseverfahren, bei denen auf dem Gebiet der metalladditiven Fertigung von Bauteilen Oberflächentexturen untersucht werden.

Die deutsche Offenlegungsschrift DE 10 2011 009 624 A1 offenbart ein Verfahren und eine Vorrichtung zur Überwachung eines generativen Fertigungsprozesses in Echtzeit, wobei ein Bauteil zumindest optisch und der Bauraum thermisch beim Schichtauftrag erfasst werden. Das Ziel ist eine Echtzeit-Prozessüberwachung, wodurch Informationen über jede hergestellte Schicht des Bauteils erfasst werden.

Der Artikel "Identification of process phenomena in DMLS by optical in-process monitoring" von R. Domröse und T. Grünberger, ein Beitrag zur Konferenz "Lasers in Manufacturing Conference 2015" beschreibt, wie metallbasierte generative Schichtbauverfahren (manchmal auch als metallbasierte additive Herstellungsverfahren bezeichnet) optisch überwacht werden können. Speziell geht es um ein DMLS-(Direct Metal Laser Sintering)-Verfahren, bei dem mittels eines Lasers Metallpulver Schicht für Schicht aufgeschmolzen wird zur Herstellung von Objekten aus dem Metallpulver. Insbesondere wird Prozessstrahlung, die von dem aufgeschmolzenen Material, also dem Schmelzbad, ausgesandt wird, optisch erfasst und einer automatischen Qualitätsbeurteilung des Prozesses zugrunde gelegt. In dem Konferenzbeitrag wird beschrieben, wie man anhand der Prozessstrahlung Aussagen über ein unerwünschtes Prozessverhalten gewinnen kann und dadurch Prozessfehler erkennen kann, die zu einer mangelhaften Qualität der hergestellten Bauteile führen.

Die Erfinder haben erkannt, dass das in dem Artikel beschriebene Verfahren manchmal dazu führen kann, dass Objekte fälschlicherweise als fehlerhaft eingestuft werden bzw. dass die Einstufung verhältnismäßig kompliziert und daher aufwändig werden kann.

Es ist daher eine Aufgabe der vorliegenden Erfindung, ein verbessertes Verfahren und eine entsprechende Vorrichtung zur automatischen Ermittlung der Qualität eines mittels eines generativen Schichtbauverfahrens hergestellten Objekts bereitzustellen, die insbesondere bevorzugt auf genauere Weise die Qualität dieses Objekts ermitteln.

Die Aufgabe wird gelöst durch ein Verfahren zur Ermittlung eines Qualitätsindikators nach Anspruch 1, eine Vorrichtung zur Ermittlung eines Qualitätsindikators nach Anspruch 13, eine Prozessüberwachungsvorrichtung nach Anspruch 14, eine Vorrichtung zur Herstellung mindestens eines dreidimensionalen Objekts nach Anspruch 15 und ein Computerprogramm nach Anspruch 16. Weiterbildungen der Erfindung sind in den Unteransprüchen angegeben. Dabei können die Verfahren auch durch die weiter unten angegebenen bzw. in Unteransprüchen ausgeführten Merkmale der Vorrichtungen weitergebildet sein oder umgekehrt, bzw. die Merkmale der Vorrichtungen können auch jeweils untereinander zur Weiterbildung genutzt werden.

Ein erfindungsgemäßes Verfahren zur Ermittlung eines Qualitätsindikators eines mittels eines generativen Schichtbauverfahrens hergestellten Objekts, wobei in dem generativen Schichtbauverfahren das Objekt Schicht für Schicht hergestellt wird durch Verfestigung eines Aufbaumaterials an den dem Querschnitt des Objekts in einer Schicht entsprechenden Stellen, weist mindestens die folgenden Schritte auf:

einen Schritt S1 des Bereitstellens eines ersten Datensatzes, der einer Prozessüberwachungsvorrichtung zugeordnet ist, wobei in dem ersten Datensatz für mehrere im Zuge der Herstellung aufeinanderfolgende Schichten, insbesondere unmittelbar aufeinanderfolgende Schichten, einer vordefinierten Anzahl von verfestigten Stellen einer Schicht jeweils eine von der dem Datensatz zugeordneten Prozessüberwachungsvorrichtung ermittelte Prozessirregularitätsinformation zugeordnet ist,

einen Schritt S2 des Ermittelns einer relativen Häufigkeit eines Vorliegens einer Prozessirregularität in einer Schicht für die mehreren aufeinanderfolgenden Schichten und des Zuweisens eines Güteindikatorwerts zu dem verfestigten Objektquerschnitt in einer Schicht entsprechend der ermittelten relativen Häufigkeit,

wobei unterschiedlichen Wertebereichen der relativen Häufigkeiten unterschiedliche Güteindikatorwerte zugeordnet sind, die unterschiedliche Qualitätsstufen anzeigen und

einen Schritt S3 des Generierens eines zweiten Datensatzes, in dem dem Objektquerschnitt in jeder der mehreren aufeinanderfolgenden Schichten ein Güteindikatorwert zugewiesen ist, und

einen Schritt S4 des Ermittelns eines die Qualität des hergestellten Objekts anzeigenden Qualitätsindikators unter Verwendung des zweiten Datensatzes (bzw. mehrerer weiterer Datensätze) .

Erfindungsgemäß wird ein erster Datensatz, der einer Prozessüberwachungsvorrichtung zugeordnet ist und von dieser Prozessüberwachungsvorrichtung ermittelte Prozessirregularitäten enthält, näher analysiert. Durch die Ermittlung der relativen Häufigkeit von Prozessirregularitäten pro Objektquerschnitt in mehreren aufeinanderfolgenden Schichten kann berücksichtigt werden, dass in vielen Prozessen mit einer gewissen Häufigkeit Prozessirregularitäten auftreten, jedoch nicht zwingend zu schweren Qualitätseinbußen an hergestellten Objekten führen müssen. Das erfindungsgemäße Vorgehen führt damit zu genaueren Ergebnissen als ein Vorgehen, bei dem beispielsweise lediglich ermittelt wird, wie viele Prozessirregularitäten insgesamt bei der Herstellung eines Objekts auftraten. Erfindungsgemäß kann berücksichtigt werden, dass das gehäufte Auftreten von Prozessirregularitäten in nur wenigen Schichten zu einer deutlich verschlechterten Bauteilqualität führt, was bei alleiniger Berücksichtigung der Gesamtzahl der Prozessirregularitäten für das Objekt nicht möglich wäre. Bei einer Prozessirregularität kann es sich in diesem Zusammenhang beispielsweise um eine zeitliche oder örtliche Variation des Prozessleuchtens (der Prozessstrahlung), um Temperaturvariationen innerhalb einer Schicht, um entdeckte Fremdpartikel, um Schichtunebenheiten, etc. handeln.

Bevorzugt handelt es sich bei dem generativen Schichtbauverfahren um ein Verfahren, bei dem pulverförmiges Aufbaumaterial mittels Wärmezufuhr zu den dem Querschnitt des Objekts in einer Schicht entsprechenden Stellen verfestigt wird, indem die Schicht selektiv mit Energiestrahlung abgetastet wird, wobei die von der Prozessüberwachungsvorrichtung ermittelte Prozessirregularitätsinformation anzeigt, ob an einer Stelle der Schicht beim Abtasten derselben mittels der Energiestrahlung eine Prozessirregularität auftrat.

Gerade die Überwachung des Aufschmelzvorgangs beim selektiven Verfestigen des Aufbaumaterials (manchmal mit dem Begriff "melt pool monitoring" bezeichnet) ist geeignet, wertvolle Informationen über die Güte des Herstellungsvorgangs eines Objekts zu liefern, weshalb gerade bei der Verwendung entsprechender Prozessüberwachungsvorrichtungen Vorteile aus dem erfinderischen Vorgehen resultieren.

Besonders bevorzugt wird die relative Häufigkeit durch Bestimmung des Flächenanteils der Stellen eines Objekts, an denen eine Prozessirregularität auftrat, bezogen auf die Gesamtfläche des Objektquerschnitts, ermittelt. Legt man der Bestimmung der relativen Häufigkeit von Prozessirregularitäten die Bestimmung des Flächenanteils der Stellen mit Prozessirregularitäten innerhalb eines Objektquerschnitts zugrunde, so kann dadurch berücksichtigt werden, ob Prozessirregularitäten innerhalb eines Querschnitts sehr stark lokal begrenzt sind oder aber einen größeren Bereich eines Objektquerschnitts betreffen, was sie gravierender macht. Es sei hier angemerkt, dass der Flächenanteil der Stellen eines Objekts, an denen eine Prozessirregularität auftrat, bezogen auf die Gesamtfläche des Objektquerschnitts, als äquivalent (da im Wesentlichen wechselseitig linear bedingt) mit einem Zeitanteil der Stellen eines Objekts, an denen eine Prozessirregularität auftrat, bezogen auf die Gesamtzeit zur Herstellung des Objektquerschnitts betrachtet werden kann, so dass auch im Folgenden "Flächenanteil" hier auch quasi synonym mit "Zeitanteil" angesehen wird, außer es ist explizit das Gegenteil erwähnt.

Bei einer bevorzugten Abwandlung wird ermittelt, ob eine Stelle in einer Schicht, der eine Prozessirregularitätsinformation zugeordnet ist, sich innerhalb eines Teilobjektquerschnitts befindet, bevorzugt eines Teilobjektquerschnitts, der vom restlichen Objektquerschnitt getrennt ist. Falls dies der Fall ist, wird zusätzlich die relative Häufigkeit des Vorliegens einer Prozessirregularität bezogen auf den Teilobjektquerschnitt ermittelt und dem Teilobjektquerschnitt ein Teilgüteindikatorwert zugeordnet. Durch die soeben beschriebene Vorgehensvariante kann berücksichtigt werden, dass eine Irregularitätshäufung in einem Teil eines Objektquerschnitts ein starkes Indiz für einen Fehler im hergestellten Objekt an dieser Stelle ist, obwohl die relative Häufigkeit der Irregularitäten bezogen auf den gesamten Querschnitt nicht auffällig ist.

Insbesondere kann auch nach Ermittlung der relativen Häufigkeit durch Bestimmung des Flächenanteils der Stellen eines Objekts, an denen eine Prozessirregularität auftrat, bezogen auf die Gesamtfläche des Objektquerschnitts noch zusätzlich ermittelt werden, ob eine Stelle in einer Schicht, der eine Prozessirregularitätsinformation zugeordnet ist, sich innerhalb eines Teilobjektquerschnitts befindet und, falls dies der Fall ist, die relative Häufigkeit des Vorliegens einer Prozessirregularität bezogen auf den Teilobjektquerschnitt ermittelt werden und dem Teilobjektquerschnitt ein Teilgüteindikatorwert $R_i$ zugeordnet werden. In diesem Fall wird dann ein dem Objektquerschnitt in einer Schicht zugeordneter Güteindikatorwert durch einen eine niedrigere Qualität anzeigenden Güteindikatorwert ersetzt, falls der dem Teilobjektquerschnitt zugeordnete Teilgüteindikatorwert eine niedrigere Qualität anzeigt als der dem gesamten Objektquerschnitt zugeordnete Güteindikatorwert. Damit kann an besonders kritischen Stellen bei der Herstellung eines Objekts noch zusätzlich die Objektqualität überwacht werden.

Insbesondere wenn alle Schichten eines Objektes dem erfindungsgemäßen Verfahren unterworfen werden, sind genauere Aussagen über die Qualität des Objekts möglich.

Bevorzugt wird eine Mehrzahl von Qualitätsindikatoren für eine entsprechende Mehrzahl von mittels eines generativen Schichtbauverfahrens gemeinsam hergestellten Objekten ermittelt. Da in einem generativen Schichtbauverfahren mehrere Objekte in einem gemeinsamen Bauvorgang hergestellt werden können, wird bevorzugt für die Mehrzahl von hergestellten Objekten, insbesondere alle, jeweils Qualitätsindikatoren (mindestens einer für jedes hergestellte Objekt) ermittelt.

Bei einer Variante des erfindungsgemäßen Verfahrens wird beim Schritt des Ermittelns einer relativen Häufigkeit eines Vorliegens einer Prozessirregularität allen Objektquerschnitten in einer Schicht als Güteindikatorwert ein Schichtgüteindikatorwert zugewiesen. Insbesondere wenn es mehrere Prozessüberwachungsvorrichtungen und ihnen zugeordnete Datensätze gibt, kann gemäß diesem Vorgehen schichtweise ein Indikatorwert ermittelt werden, der die von allen Prozessüberwachungsvorrichtungen gelieferten Irregularitätsinformationen berücksichtigt. Damit kann insbesondere erkannt werden, ob sich eine Verschlechterung der Bauteilqualität auf sich in bestimmten Schichten häufende Prozessfehler zurückzuführen ist. Insbesondere kann der Schichtgüteindikatorwert aus den den einzelnen Prozessüberwachungsvorrichtungen zugeordneten Güteindikatorwerten ermittelt werden oder aber es wird einfach die relative Häufigkeit von Prozessirrgularitäten pro Schicht ermittelt und dieser ein Schichtgüteindikatorwert zugeordnet.

Bei einer bevorzugten Verfahrensvariante wird im Schritt S1 eine Anzahl von weiteren ersten Datensätzen bereitgestellt, von denen jeder einer Prozessüberwachungsvorrichtung zugeordnet ist, im Schritt S2 für jeden ersten Datensatz den Objektquerschnitten in den mehreren aufeinanderfolgenden Schichten jeweils ein Güteindikatorwert $R_i$ zugewiesen, im Schritt S3 basierend auf den Zuweisungen im Schritt S2 eine Mehrzahl von zweiten Datensätzen generiert und im Schritt S4 zur Ermittlung eines Qualitätsindikators Q für ein Objekt zunächst für jeden zweiten Datensatz ein Einzel-Qualitätsindikatorwert EQ ermittelt und ein Qualitätsindikatorwert Q anhand der Einzel-Qualitätsindikatorwerte EQ ermittelt, bevorzugt durch Versehen der Einzel-Qualitätsindikatorwerte EQ mit Wichtungsfaktoren.

Durch die Einführung von Wichtungsfaktoren für die einzelnen Prozessüberwachungsvorrichtungen zugeordneten Güteindikatorwerte kann den unterschiedlichen Prozessüberwachungsvorrichtungen eine unterschiedliche Bedeutung bei der Beurteilung der Bauteilqualität zugemessen werden. Prinzipiell können auch Wichtungsfaktoren mit gleichem Betrag mindestens zweien bzw. auch allen Prozessüberwachungsvorrichtungen zugeordnet werden bzw. sein.

Bei einer weiteren bevorzugten Verfahrensvariante wird im Schritt S1 des Bereitstellens eines ersten Datensatzes eine Mehrzahl von ersten Datensätzen bereitgestellt, von denen jeder einer Prozessüberwachungsvorrichtung zugeordnet ist, im Schritt S2 des Ermittelns einer relativen Häufigkeit eines Vorliegens einer Prozessirregularität wird für jeden ersten Datensatz den Objektquerschnitten in den mehreren aufeinanderfolgenden Schichten jeweils ein Güteindikatorwert zugewiesen, im Schritt S3 des Generierens eines zweiten Datensatzes wird basierend auf den Zuweisungen im vorangegangenen Schritt eine Mehrzahl von zweiten Datensätzen generiert und im Schritt S4 zur Ermittlung eines Qualitätsindikators für ein Objekt wird zunächst ein Gesamt-Güteindikatorwert für einen Objektquerschnitt in einer Schicht basierend auf der Mehrzahl von zweiten Datensätzen ermittelt, bevorzugt durch Versehen der einzelnen einem Objektquerschnitt zugeordneten Güteindikatorwerte mit Wichtungsfaktoren, und nachfolgend wird der Qualitätsindikator für das Objekt basierend auf den ermittelten Gesamt-Güteindikatorwerten ermittelt. Bei dieser Vorgehensweise können die von den einzelnen Prozessüberwachungsvorrichtungen pro Schicht gelieferten Informationen gewichtet werden.

Bei einem bevorzugten Vorgehen wird ein einem Objektquerschnitt in einer Schicht zugeordneter Güteindikatorwert oder Gesamt-Güteindikatorwert durch einen eine höhere Qualität anzeigenden Güteindikatorwert bzw. Gesamt-Güteindikatorwert ersetzt, falls den diesem Objekt zugeordneten Objektquerschnitten in mindestens n folgenden Schichten, bevorzugt n unmittelbar folgenden Schichten, ein eine höhere Qualität anzeigender Güteindikatorwert bzw. Gesamt-Güteindikatorwert zugeordnet ist, wobei n eine natürliche vordefinierte, beispielsweise eine benutzerdefinierte und/oder aus Vorversuchen ermittelte, Zahl ist.

Mit dem soeben beschriebenen Vorgehen kann berücksichtigt werden, dass manche Prozessirregularitäten nicht zu Prozess- und Bauteilfehlern führen, sondern einem Ausheilmechanismus unterliegen. Insbesondere wenn in den nachfolgenden Schichten keine Prozessirregularität auftritt, so spricht vieles dafür, dass sich eine Prozessirregularitätshäufung in einer Schicht nicht nachteilig auf die Bauteilqualität auswirken wird. Dies kann mit dem soeben beschriebenen Vorgehen berücksichtigt werden. n kann dabei beispielsweise eine Zahl unter 10 sein, z.B. 2, 4, 6 oder 8.

Bei einer bevorzugten Verfahrensvariante wird wie folgt abgeleitet, ob ein Objekt eine akzeptable Qualität aufweist:

Es wird ein Güteindikatorgrenzwert festgelegt und die Güteindikatorwerte bzw. Gesamt-Güteindikatorwerte für die Objektquerschnitte des Objekts in den einzelnen Schichten werden mit dem Güteindikatorgrenzwert verglichen. Die Qualität des Objekts wird nur dann als akzeptabel bewertet, wenn keiner der Güteindikatorwerte bzw. Gesamt-Güteindikatorwerte einer niedrigeren Qualitätsstufe zugeordnet ist als der Güteindikatorgrenzwert.

Durch die Einführung eines Güteindikatorgrenzwerts kann auf einfache Weise eine Untergrenze für eine akzeptable Bauteilqualität vorgegeben werden. Insbesondere kann der Güteindikatorgrenzwert auch spezifisch für jede Schicht vorgegeben werden.

Insbesondere kann der Qualitätsindikator ein Element aus einer Menge von Qualitätsmaßanzeigern sein, deren Mächtigkeit größer Eins ist und zwischen deren Mitgliedern eine Ordnungsrelation besteht. Durch die Einführung einer geordneten Menge für die Qualitätsindikatoren (beispielsweise eines Zahlenbereichs bzw. einer Teilmenge der natürlichen Zahlen, z.B. die Zahlen 1 bis 10, kann auf besonders einfache Weise eine Qualitätsbewertung stattfinden. Auf Basis der Qualitätsindikatoren kann je nach Anwendungsbereich des hergestellten Objekts hergeleitet werden, ob seine Qualität ausreichend ist. Beispielsweise kann das Erreichen eines verhältnismäßig niedrigen Qualitätsindikators (also ein Qualitätsindikator, der eine relativ niedrige Qualität anzeigt) für ein Objekt im Bereich des Rapid Prototyping noch ausreichend sein, während für eine Serienfertigung von Bauteilen für einen Langzeiteinsatz das Erreichen eines im Vergleich zum ersten Beispiel höheren Qualitätsindikators erforderlich sein kann.

Eine erfindungsgemäße Vorrichtung zur Ermittlung eines Qualitätsindikators eines mittels eines generativen Schichtbauverfahrens hergestellten Objekts, wobei in dem generativen Schichtbauverfahren das Objekt Schicht für Schicht hergestellt wird durch Verfestigung eines Aufbaumaterials an den dem Querschnitt des Objekts in einer Schicht entsprechenden Stellen, weist mindestens auf:

eine Bereitstellungseinheit zum Bereitstellen eines ersten Datensatzes, der einer Prozess-Überwachungsvorrichtung zugeordnet sind, wobei in dem ersten Datensatz für mehrere im Zuge der Herstellung aufeinanderfolgende Schichten, insbesondere unmittelbar aufeinanderfolgende Schichten, einer vordefinierten Anzahl von verfestigten Stellen einer Schicht jeweils eine von der dem Datensatz zugeordneten Prozess-Überwachungsvorrichtung ermittelte Prozessirregularitätsinformation zugeordnet ist,
eine Ermittlungseinheit, die im Betrieb eine relative Häufigkeit des Vorliegens einer Prozessirregularität in einer Schicht für die mehreren aufeinanderfolgenden Schichten ermittelt und dem verfestigtem Objektquerschnitt in einer Schicht entsprechend der ermittelten relativen Häufigkeit jeweils einen Güteindikatorwert zuweist, wobei unterschiedlichen Wertebereichen der relativen Häufigkeiten unterschiedliche Güteindikatorwerte zugeordnet sind, die unterschiedliche Qualitätsstufen anzeigen und
eine Generierungseinheit, die im Betrieb einen zweiten Datensatz generiert, in dem dem Objektquerschnitt in jeder der mehreren aufeinanderfolgenden Schichten ein Güteindikatorwert zugewiesen ist, und
eine Ermittlungseinheit zum Ermitteln eines die Qualität des hergestellten Objekts anzeigenden Qualitätsindikators unter Verwendung des zweiten Datensatzes.

Die Vorrichtung zur Ermittlung eines Qualitätsindiaktors kann beispielsweise mittels eines zu diesem Zweck abgestellten Computers realisiert sein, oder aber es kann sich lediglich um ein Computerprogramm handeln. Das Computerprogramm kann beispielsweise auf einer von der generativen Schichtbauvorrichtung räumlich getrennten Rechenvorrichtung ablaufen.

Eine bevorzugte erfindungsgemäße Prozessüberwachungsvorrichtung zur Ermittlung des Vorliegens von Prozessirregularitäten in einem generativen Schichtbauverfahren, bei dem die Objekte Schicht für Schicht hergestellt werden durch Verfestigung eines Aufbaumaterials an den dem Querschnitt eines Objekts in einer Schicht entsprechenden Stellen, weist eine erfindungsgemäße Vorrichtung zur Ermittlung eines Qualitätsindikators auf sowie weiterhin:

eine Irregularitätsermittlungseinheit, die für eine vordefinierte Anzahl von mit der Energiestrahlung abgetasteten Stellen einer Schicht jeweils eine Irregularitätsermittlung eines Vorliegens einer Prozessirregularität in Bezug auf mindestens einen Prozessparameter bei der Herstellung durchführt, wobei es sich bei der Irregularitätsermittlungseinheit bevorzugt um eine Schichtüberwachungseinheit und/oder eine photodiodenbasierte Schmelzbadüberwachungseinheit und/oder eine optische Tomographieeinheit handelt, und

eine Prozessirregularitäts-Dokumentationseinheit, die einen ersten Datensatz generiert, in welchem für mehrere aufeinanderfolgende Schichten, bevorzugt alle Schichten, einer vordefinierten Anzahl von mit der Energiestrahlung abgetasteten Stellen einer Schicht jeweils eine Prozessirregularitätsinformation zugeordnet ist, die anzeigt, ob bei der Verfestigung des Aufbaumaterials an dieser Stelle eine Prozessirregularität auftrat.

Insbesondere kann also die Vorrichtung zur Ermittlung eines Qualitätsindikators in eine Prozessüberwachungsvorrichtung integriert sein. Insbesondere wenn es mehrere Prozessüberwachungsvorrichtungen gibt, kann jede der Prozessüberwachungsvorrichtungen dann bereits einen Güteindikatorwert pro Schicht und/oder Objektquerschnitt liefern.

Da die genannten Irregularitätsermittlungseinheiten, insbesondere Vorrichtungen zur Schmelzbadüberwachung, wichtige Informationen über die Bauteilqualität liefern können, ist die vorliegende Erfindung insbesondere im Zusammenhang mit solchen Prozessüberwachungsvorrichtungen zur Schmelzbadüberwachung oder optischen Tomographieeinheiten von Vorteil.

Eine erfindungsgemäße Vorrichtung zur Herstellung mindestens eines dreidimensionalen Objekts mittels eines generativen Schichtbauverfahrens, wobei in dem generativen Schichtbauverfahren die Objekte Schicht für Schicht hergestellt werden durch Verfestigung eines Aufbaumaterials an den dem Querschnitt eines Objekts in einer Schicht entsprechenden Stellen, umfasst:

eine Abtasteinheit zum Abtasten von einem Querschnitt des herzustellenden Objektes entsprechenden Stellen einer aufgebrachten Schicht des Aufbaumaterials mit einer Energiestrahlung zum selektiven Verfestigen des Aufbaumaterials,

eine erfindungsgemäße Vorrichtung zur Ermittlung eines Qualitätsindikators und/oder eine erfindungsgemäße Prozessüberwachungsvorrichtung.

Ein erfindungsgemäßes Computerprogramm ist in eine programmierbare Steuereinheit und/oder Vorrichtung ladbar und weist Programmcodemittel auf, um alle Schritte eines erfindungsgemäßen Verfahrens zur Ermittlung eines Qualitätsindikators auszuführen, wenn das Computerprogramm ausgeführt wird.

Weitere Merkmale und Zweckmäßigkeiten der Erfindung ergeben sich aus der Beschreibung von Ausführungsbeispielen anhand der beigefügten Zeichnungen.

Fig. 1 ist eine schematische, teilweise im Schnitt dargestellte Ansicht einer Vorrichtung zum generativen Herstellen eines dreidimensionalen Objekts gemäß einer Ausführungsform der Erfindung.

Fig. 2 ist ein Diagramm, welches schematisch den Aufbau einer im Zusammenhang mit der Erfindung verwendbaren Prozessüberwachungsvorrichtung zeigt.

Fig. 3 ist ein Diagramm, welches schematisch den Aufbau einer erfindungsgemäßen Vorrichtung zur Ermittlung eines Qualitätsindikators darstellt.

Fig. 4 ist ein Diagramm, welches schematisch die Schritte des erfindungsgemäßen Verfahrens zur Ermittlung eines Qualitätsindikators darstellt.

Fig. 5 ist ein Prozessablaufdiagramm, welches einen beispielhaften Algorithmus zur Umsetzung des erfindungsgemäßen Verfahrens zeigt.

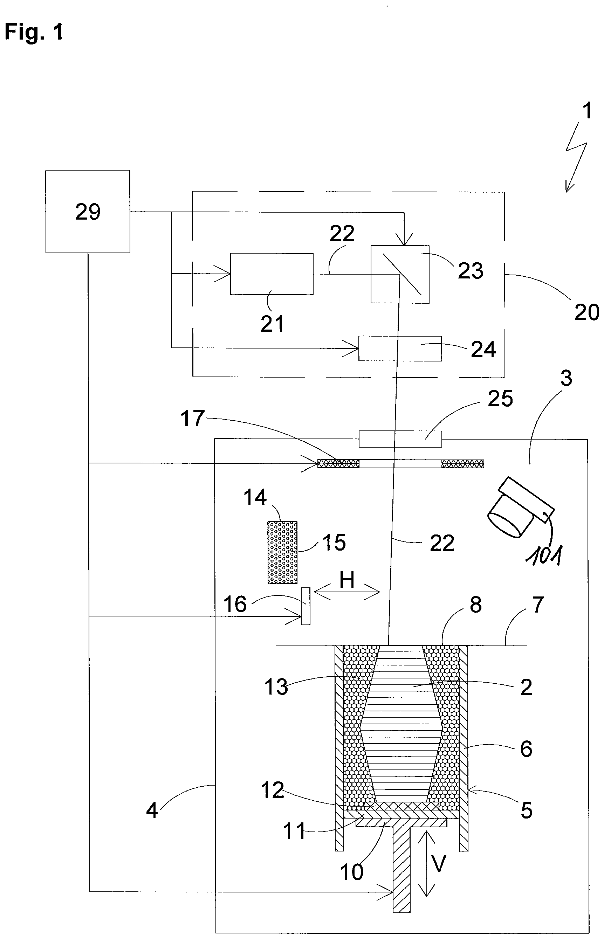

Für eine Beschreibung des erfindungsgemäßen Verfahrens soll zunächst nachfolgend am Beispiel einer Lasersinter- oder schmelzvorrichtung eine erfindungsgemäße generative Schichtbauvorrichtung unter Bezugnahme auf Fig. 1 beschrieben werden. Es sei an dieser Stelle vermerkt, dass in der vorliegenden Anmeldung der Begriff "Anzahl" stets im Sinne von "ein oder mehrere" zu verstehen ist.

Zum Aufbauen eines Objekts 2 enthält die Lasersinter- oder Laserschmelzvorrichtung 1 eine Prozesskammer oder Baukammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selbst aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der Vorrichtung angebracht sein. Die Steuereinrichtung kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinrichtung geladen werden kann.

Die Steuereinrichtung 29 wird über einen Steuerbefehlssatz angesteuert, der u.a. Daten enthält, die die Struktur der herzustellenden Anzahl von Objekten beinhalten, insbesondere ein dreidimensionales CAD-Schichtenmodell der Objekte mit Informationen über den jeweiligen Querschnitt eines Objekts in jeder zu verfestigenden Schicht des Aufbaumaterials, und Daten, die die genauen Parameter beim Verfestigen des Aufbaumaterials festlegen. Insbesondere enthalten die Daten genaue Informationen über jede zu verfestigende Schicht bei der Herstellung der Anzahl von Objekten. Wie ein Steuerbefehlssatz im Detail aussieht, ist im Stand der Technik hinreichend beschrieben und wird hier nicht näher erläutert, da dies nicht Bestandteil der vorliegenden Erfindung ist.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

Fig. 1 zeigt weiterhin eine Prozessüberwachungsvorrichtung 101, die zwar innerhalb der Prozesskammer 3 und damit als Teil der Lasersintervorrichtung 1 gezeigt ist, jedoch durchaus auch außerhalb der Prozesskammer 3 angeordnet sein kann. Bei der Prozessüberwachungsvorrichtung 101 handelt es sich um eine Vorrichtung zur Ermittlung des Prozessverhaltens beim Aufbau von Objekten mit der generativen Schichtbauvorrichtung. Beispielsweise kann die Prozessüberwachungsvorrichtung 101 zur Überwachung des Zustands während der Verfestigung des Aufbaumaterials mit dem Laserstrahl dienen. In solch einem Fall weist sie einen Sensor auf, der geeignet ist, die vom Auftreffort des Laserstrahls auf das Aufbaumaterial emittierte Prozessstrahlung zu erfassen. Beispielsweise kann der Sensor als optische Kamera oder als Fotodiode ausgeführt sein. Basierend auf der Intensität des registrierten Prozesslichts (der Prozessstrahlung) oder aber auch basierend auf der Analyse des zeitlichen Signalverlaufs, der im Sensor durch die Prozessstrahlung hervorgerufen wird, können Aussagen über Unregelmäßigkeiten des Verfestigungsvorgangs getroffen werden. Bei Verwendung einer Kamera anstelle einer Fotodiode erhält man zusätzlich noch eine zweidimensionale Information.

Neben der eben beispielhaft genannten Schmelzbadüberwachungsvorrichtung sind auch andere Prozessüberwachungsvorrichtungen bekannt, die alternativ oder zusätzlich zur Schmelzbadüberwachungsvorrichtung eingesetzt werden können, beispielsweise kamerabasierte Schichtüberwachungsvorrichtungen, die Unregelmä-ßigkeiten beim Schichtauftrag erkennen können oder aber Vorrichtungen, die die Schichtoberfläche nach dem Verfestigungsvorgang analysieren. Beispiele für Prozessirregularitäten, die mit Prozessüberwachungsvorrichtungen erkennbar sind, sind insbesondere Folgende:

- das Auftreten bzw. das erhöhte (verstärkte) Auftreten von Partikeln wie Spratzern, Rauch, Dämpfen o.ä.;
- zeitliche oder örtliche Veränderungen der Strahlungsemission vom Einwirkort der Strahlung auf das Aufbaumaterial, die beispielsweise Rückschlüsse auf Überhitzungen des Aufbaumaterials zulassen, insbesondere wenn auch noch eine Spektralanalyse der Prozessstrahlung (zum Beispiel auch eine indirekte Spektralanalyse, etwa mittels eines Sensors für mehrere Wellenlängen wie einen Mehrfarbsensor) durchgeführt wird;
- eine große Oberflächenrauheit eines bereits verfestigten Bereichs innerhalb einer Schicht;

- weitere Mess- bzw. Vorhersageergebnisse, die auf eine erhöhte Fehlerwahrscheinlichkeit im Materialgefüge des hergestellten Objekts schließen lassen.

Auf welche Weise anhand von Sensorinformationen auf Prozessirregularitäten geschlossen werden kann, ist dem Fachmann bereits bekannt und ist nicht Gegenstand der vorliegenden Erfindung.

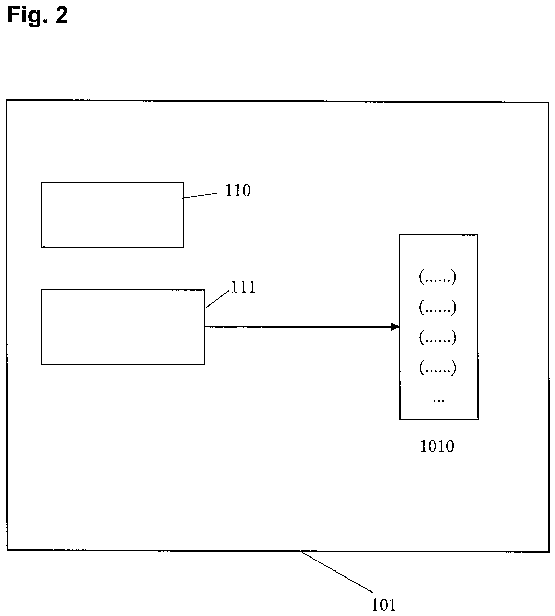

Ein beispielhafter Aufbau einer im Zusammenhang mit der Erfindung verwendbaren Prozessüberwachungsvorrichtung 101 ist in Fig. 2 dargestellt. Insbesondere enthält die Prozessüberwachungsvorrichtung 101 eine Irregularitätsermittlungseinheit 110, mittels derer für eine Anzahl von Stellen einer Schicht ermittelt wird, ob es eine Irregularität im Prozessablauf gibt. Im Falle einer Schmelzbadüberwachungsvorrichtung würde die Irregularitätsermittlungseinheit 110 beispielsweise den Sensor mit nachgeschalteter Verarbeitungs-Hardware und -Software für die Sensorinformationen zur Ableitung einer Aussage, ob eine Irregularität aufgetreten ist, umfassen.

Weiterhin enthält die Prozessüberwachungsvorrichtung eine Prozessirregularitäts-Dokumentationseinheit 111, welche einen ersten Datensatz 1010 generiert, in dem bezogen auf mehrere aufeinanderfolgende Schichten für eine Anzahl von Stellen jeweils einer Schicht eine Prozessirregularitätsinformation abgelegt ist, die anzeigt, ob, z.B. bei der Verfestigung des Aufbaumaterials, an der entsprechenden Stelle eine Prozessirregularität auftrat. Ein Eintrag in solch einem ersten Datensatz 1010, der Bezug nimmt auf eine Schicht i während des Herstellungsvorgangs des Objekts, kann beispielsweise folgenden Inhalt haben:

$$(x_j, \ y_j, \ O_k, \ I, \ ...,i)$$

Der Bezeichner $O_k$ drückt in obigem Eintrag aus, dass sich der Eintrag auf das Objekt k bezieht, da in einem generativen Schichtbauverfahren mehrere Objekte gleichzeitig hergestellt werden können und es somit innerhalb einer zu verfestigenden Schicht auch mehrere Objektquerschnitte geben kann. Die Koordinaten $x_j$ und $y_j$ bezeichnen die Stelle einer Schicht, für die eine Irregularitätsinformation abgelegt wird. Schließlich repräsentiert der Parameter I die Prozessirregularitätsinformation. Bei dem Parameter I kann es sich um eine Kennziffer handeln, die die Schwere einer Prozessirregularität zum Ausdruck bringt (beispielsweise eine natürliche Zahl zwischen 1 und 10), oder aber es kann sich auch nur um eine binäre Information (0 und 1) handeln. Beispielsweise würde dann eine 1 kennzeichnen, dass an der Stelle $x_j$, $y_j$ in dem dem Objekt k zugeordneten Objektquerschnitt in der Schicht i eine Prozessirregularität auftrat. Stellen, an denen keine Prozessirregularität festgestellt wurde, könnten jeweils den Wert 0 für den Irregularitätsbezeichner I aufweisen.

Der erste Datensatz 1010 kann entweder, wie in Fig. 2 gezeigt, in einem Speicher in der Prozessüberwachungsvorrichtung 101 abgelegt sein, welcher auch in der Prozessirregularitäts-Dokumentationseinheit 111 selbst vorhanden sein kann, oder aber an eine Speichervorrichtung außerhalb der Prozessüberwachungsvorrichtung 101 ausgegeben werden, mit welcher die Prozessüberwachungsvorrichtung 101 signaltechnisch verbunden ist.

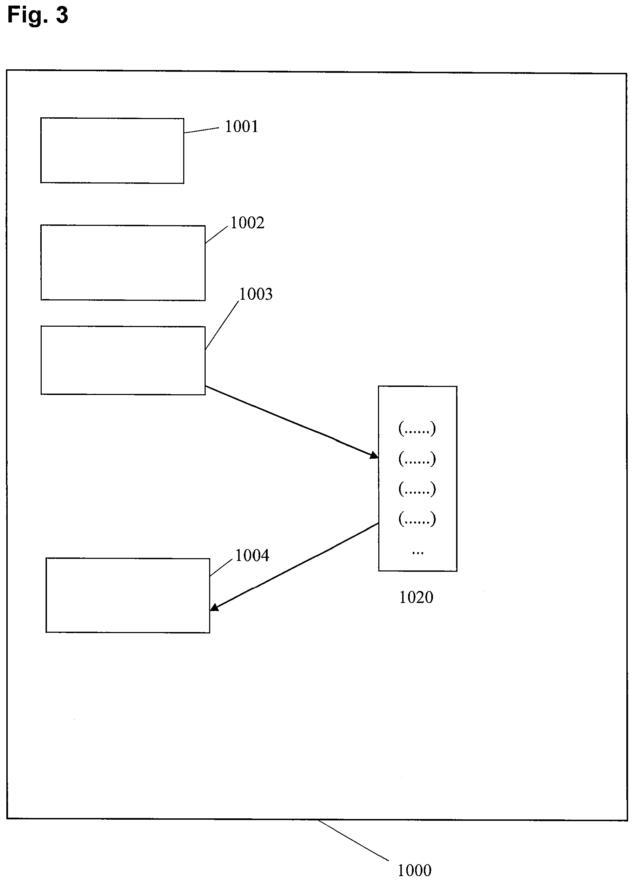

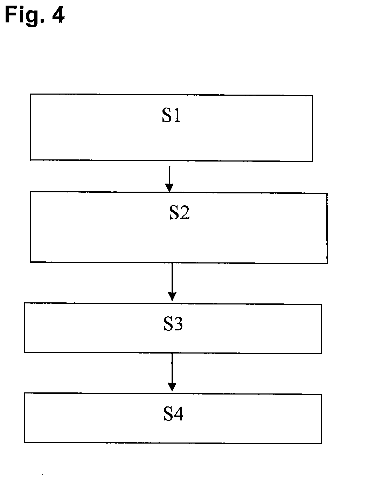

Fig. 3 zeigt schematisch den Aufbau einer erfindungsgemäßen Vorrichtung 1000 zur Ermittlung eines Qualitätsindikators Q eines mittels eines generativen Schichtbauverfahrens hergestellten Objekts. Fig. 4 zeigt den Ablauf eines erfindungsgemäßen Verfahrens zur Ermittlung eines Qualitätsindikators Q, welches beispielsweise mit der Vorrichtung 1000 aus Fig. 3 durchgeführt werden kann.

Die Vorrichtung 1000 enthält eine Bereitstellungseinheit 1001 zum Bereitstellen (Schritt S1) einer Anzahl von ersten Datensätzen 1010, die jeweils einer aus einer entsprechenden Anzahl von Prozessüberwachungsvorrichtungen 101 zugeordnet sind. Mit anderen Worten, die Bereitstellungseinheit 1001 nimmt von einer Anzahl von Prozessüberwachungsvorrichtungen 101 die von deren Prozessirregularitäts-Dokumentationseinheiten 111 generierten ersten Datensätze 1010 entgegen. Bei der Anzahl von Prozessüberwachungsvorrichtungen 101 kann es sich um lediglich eine einzige Prozessüberwachungsvorrichtung handeln oder aber um eine Mehrzahl von Prozessüberwachungsvorrichtungen, die bevorzugt voneinander verschieden sind, jedoch nicht zwingend voneinander verschieden sein müssen. Zur Entgegennahme der Anzahl von ersten Datensätzen 1010 muss die Vorrichtung 1000 nicht zwingend mit den entsprechenden Prozessüberwachungsvorrichtungen 101 verbunden sein. Vielmehr können die ersten Datensätze auch in einem Speicher abgelegt sein, der von den Prozessüberwachungsvorrichtungen 101 und/oder von der Vorrichtung 1000 getrennt ist. In jedem Fall macht jedoch die Bereitstellungseinheit 1001 die Inhalte der ersten Datensätze für die anderen Bestandteile der Vorrichtung 1000 zugänglich.

Weiterhin enthält die Vorrichtung 1000 eine Ermittlungseinheit 1002, mittels welcher der in Fig. 4 gezeigte Verfahrensschritt S2 des erfindungsgemäßen Verfahrens implementiert werden kann. Insbesondere ermittelt die Ermittlungseinheit 1002 eine relative Häufigkeit des Vorliegens einer Prozessirregularität innerhalb des Objektquerschnitts eines Objekts in jeder der Anzahl von aufeinanderfolgenden Schichten, bevorzugt für die Querschnitte mehrerer, insbesondere aller Objekte in diesen Schichten. Nachfolgend weist die Ermittlungseinheit 1002 den Objektquerschnitten in den Schichten entsprechend der für sie jeweils ermittelten relativen Häufigkeiten jeweils einen Güteindikatorwert $R_i$ zu.

Die relative Häufigkeit kann beispielsweise durch Bestimmung des Flächenanteils der Stellen, an denen eine Prozessirregularität im ersten Datensatz 1010 angezeigt wird, an der Gesamtfläche eines Objektquerschnitts ermittelt werden. Alternativ kann die Anzahl der Positionen innerhalb eines Objektquerschnitts, an denen eine Prozessirregularität auftrat, in Relation zur Gesamtzahl der innerhalb eines Objektquerschnitts vorhandenen Zahl an Stellen innerhalb des ersten Datensatzes 1010 gesetzt werden. Vorteilhafterweise handelt es sich bei dem Güteindikatorwert $R_i$ um eine natürliche Zahl (beispielsweise eine Zahl zwischen 1 und 10). Beispielsweise könnte ein Güteindikatorwert $R_i$ wie folgt einem Wert der relativen Häufigkeit pro Schicht und Objektquerschnitt zugewiesen werden:

| Relative Häufigkeit von Irregularitäten | Güteindikatorwert $R_i$ |
|---|---|
| 0-2 % | 1 |
| 2-5 % | 2 |
| 5-10 % | 3 |
| 10-15 % | 4 |
| 15-25 % | 5 |
| etc. | |

Man erkennt, dass es in obiger Tabelle eine nichtlineare Zuordnung von Bereichen relativer Häufigkeiten und Güteindikatorwerten $R_i$ gibt. Mit anderen Worten, mit wachsendem Wert für die relative Häufigkeit ist einem bestimmten Güteindikatorwert $R_i$ ein größerer Prozentbereich zugeordnet als für niedrige Werte der relativen Häufigkeiten. Dies muss zwar nicht so sein, jedoch hat solch eine nichtlineare Zuordnung den Vorteil, dass insbesondere ein Qualitätsbereich, der von Interesse ist, sehr fein aufgeschlüsselt werden kann. Wenn eine Prozessqualität schlecht ist, ist es beispielsweise gleichgültig, ob die Qualität "sehr schlecht" oder "besonders schlecht" gewesen ist.

Schließlich erzeugt eine Generierungseinheit 1003 zu jedem der Anzahl an ersten Datensätzen 1010 einen entsprechenden zweiten Datensatz 1020, in dem einem Objektquerschnitt in jeder der Schichten ein Güteindikatorwert $R_i$ zugewiesen ist (Schritt S3 in Fig. 4). Ein Eintrag in solch einem zweiten Datensatz 1020, der Bezug nimmt auf eine Schicht i während des Herstellungsvorgangs eines Objekts, kann beispielsweise folgenden Inhalt haben:

$$(O_k, \quad R_i, \quad m_i)$$

Der Bezeichner $O_k$ drückt in obigem Eintrag aus, dass sich der Eintrag auf das Objekt k bezieht, da in einem generativen Schichtbauverfahren mehrere Objekte gleichzeitig hergestellt werden können und es somit innerhalb einer zu verfestigenden Schicht auch mehrere Objektquerschnitte geben kann. Der Bezeichner $m_i$ kennzeichnet die Zugehörigkeit dieses Eintrags (wie auch des gesamten zweiten Datensatzes) zu der Prozessüberwachungsvorrichtung m. Damit existiert für jede der Prozessüberwachungsvorrichtungen 101 ein zweiter Datensatz 1020, in dem den Schichten jeweils für einen Objektquerschnitt ein Güteindikatorwert $R_i$ zugewiesen ist, der die Häufigkeit der von der Prozessüberwachungsvorrichtung für den Objektquerschnitt in dieser Schicht gelieferten Prozessirregularitäten repräsentiert. Der Einfachheit halber ist in Fig. 3 lediglich ein zweiter Datensatz 1020 gezeigt.

Schließlich enthält die Vorrichtung zur Ermittlung eines Qualitätsindikators Q noch eine Qualitätsindikator-Ermittlungseinheit 1004, welche anhand der Daten in den zweiten Datensätzen 1020, also der in diesen Datensätzen den einzelnen Schichten und Objektquerschnitten zugeordneten Güteindikatorwerte $R_i$, einen Qualitätsindikatorwert für ein hergestelltes Objekt, bevorzugt für mehrere Objekte, insbesondere für jedes der parallel in einem Herstellungsvorgang hergestellten Objekte, ermittelt (Schritt S4 in Fig. 4).

Im Folgenden werden beispielhaft verschiedene mögliche Vorgehensweisen beschrieben, wie man anhand der zweiten Datensätze 1020 zu einem Qualitätsindikatorwert für ein Objekt gelangen kann. Dabei beschränkt sich die nachfolgende Beschreibung wegen der daraus resultierenden einfacheren Erläuterung zunächst auf den Fall des Vorhandenseins lediglich eines zweiten Datensatzes 1020:

In den folgenden Beispielen wird weiterhin angenommen, dass ein Güteindikatorwert $R_i$ eine natürliche Zahl zwischen 1 und einer Obergrenze (beispielsweise 10) ist. Natürlich könnte auch die Zahl "0" ein möglicher Güteindikatorwert sein.

Ein Vorgehen der Qualitätsindikator-Ermittlungseinheit 1004 könnte beispielsweise so aussehen, dass in einem zweiten Datensatz 1020 jeder Güteindikatorwert $R_i$ für ein Objekt (also alle in den Schichten des zweiten Datensatzes vorhandenen Güteindikatorwerte für Objektquerschnitte dieses Objekts) mit einem Güteindikatorgrenzwert Z verglichen wird. Dieser Güteindikatorgrenzwert Z ist beispielsweise jener Güteindikatorwert, ab dessen Überschreiten bzw. Unterschreiten die Qualität des zugehörigen Objektquerschnitts als nicht mehr akzeptabel angesehen wird.

Die Wahl des Werts eines Qualitätsindikators Q (beispielsweise ebenfalls eine natürliche Zahl aus einer begrenzten Menge, z.B. den Zahlen 1 bis 6) könnte nun davon abhängig gemacht werden, wie oft bzw. ob der Güteindikatorgrenzwert Z für ein Objekt überschritten bzw. unterschritten wird. Beispielsweise könnte bei Überschreitungen bzw. Unterschreitungen des Güteindikatorgrenzwerts Z durch Güteindikatorwerte $R_i$ der maximale bzw. minimale Güteindikatorwert $R_i$ als Qualitätsindikatorwert Q festgelegt werden. Falls es keine Überschreitungen bzw. (insbesondere) Unterschreitungen des Güteindikatorgrenzwerts Z gibt, könnte z.B. als Qualitätsindikatorwert Q einfach der Mittelwert $<R_i>$ aller Güteindikatorwerte gewählt werden.

Zur einfacheren Erläuterung werde von nun an angenommen, dass höhere Güteindikatorwerte häufigere Prozessirregularitäten (also eine schlechtere Qualität) anzeigen.

Durch die erfindungsgemäße Festlegung von Güteindikatorwerten pro Objektquerschnitt in einer Schicht wird es möglich, eine ungenügende Bauteilqualität, die durch einen oder mehrere Objektquerschnitte mit besonders schlechter Qualität zustande kommt, besonders einfach zu ermitteln. Bei einem Vorgehen, bei dem lediglich aufgrund der vorhandenen Gesamtzahl an Prozessirregularitäten auf die Bauteilqualität geschlossen wird, würde nämlich eine (einzelne) besonders "schlechte" Schicht nicht hinreichend Berücksichtigung finden können.

Insbesondere könnten für den Qualitätsindikator Q auch nur die Werte 0 und 1 zugelassen werden und ein Wert 1 dem Qualitätsindikator nur dann zugewiesen werden, wenn keiner der Güteindikatorwerte für ein Objekt den Güteindikatorgrenzwert Z überschreitet. Hier sind viele Variationsmöglichkeiten vorhanden, ohne vom Gedanken der beanspruchten Erfindung abzuweichen.

Optional kann, falls für den Qualitätsindikator nicht nur die Werte 0 und 1 zugelassen sind, auch noch ein Akzeptanzindikator A eingeführt werden, der nur die Werte 1 (akzeptable Objektqualität) und 0 (inakzeptable Objektqualität) annehmen kann. Der Wert des Akzeptanzindikators A kann dann in Abhängigkeit vom Wert des Qualitätsindikators festgelegt werden.

Obwohl das obige Vorgehen bereits zu einer genaueren Ermittlung von fehlerhaften Objekten führt, lässt es sich doch so abwandeln, dass noch präzisere Aussagen über die Qualität eines hergestellten Objekts getroffen werden können. Die Erfinder haben erkannt, dass es Ausheilmechanismen während des Herstellungsprozesses gibt. Wenn eine Irregularität beispielsweise in einem größeren Prozentsatz der Fläche eines Objektquerschnitts auftritt, ist dies zunächst problematisch, da dies auf einen Materialfehler (Bindefehler, eingeschmolzener Spratzer oder Pore) schließen lässt. Ein derartiger Materialfehler kann jedoch mit der Belichtung von darauffolgenden Schichten ausgeheilt werden. Der Grund ist, dass bereits verfestigte Schichten bei Belichtung der darüber liegenden Schicht nochmals (teilweise) aufgeschmolzen werden. Voraussetzung für eine Ausheilung ist aber, dass in den darüber liegenden Schichten nicht wiederum Prozessirregularitäten in übermäßigem Ausmaß auftreten. Selbst wenn es also innerhalb einer Schicht eine Häufung von Prozessirregularitäten in einem hohen Ausmaß gab, kann dennoch ein Bauteil eine gute Qualität aufweisen aufgrund des Ausheilmechanismus. Dementsprechend kann zur Ermittlung des Qualitätsindikators Q so vorgegangen werden, dass Güteindikatorwerte einer Schicht eines Objekts im zweiten Datensatz 1020 durch eine höhere Qualität anzeigende Güteindikatorwerte ersetzt werden, wenn in mindestens n auf die Schicht folgenden Schichten Güteindikatorwerte vorhanden sind, die eine höhere Qualität anzeigen. n kann hierbei irgendeine natürliche Zahl zwischen 1 und beispielsweise 10 sein, z.B. 3, 5, 8, etc. Insbesondere kann eine Höherstufung von Güteindikatorwerten (im obigen Beispiel entspräche dies einer Herabstufung von Güteindikatorwerten $R_i$) nur für jene Schichten stattfinden, in denen ein Güteindikatorwert im zweiten Datensatz 1020 vorhanden ist, der einen vorgegebenen Güteindikatorgrenzwert Z überschreitet. Durch dieses Vorgehen kann die Zahl der ungerechtfertigt als "schlecht" eingeordneten hergestellten Objekte verringert werden.

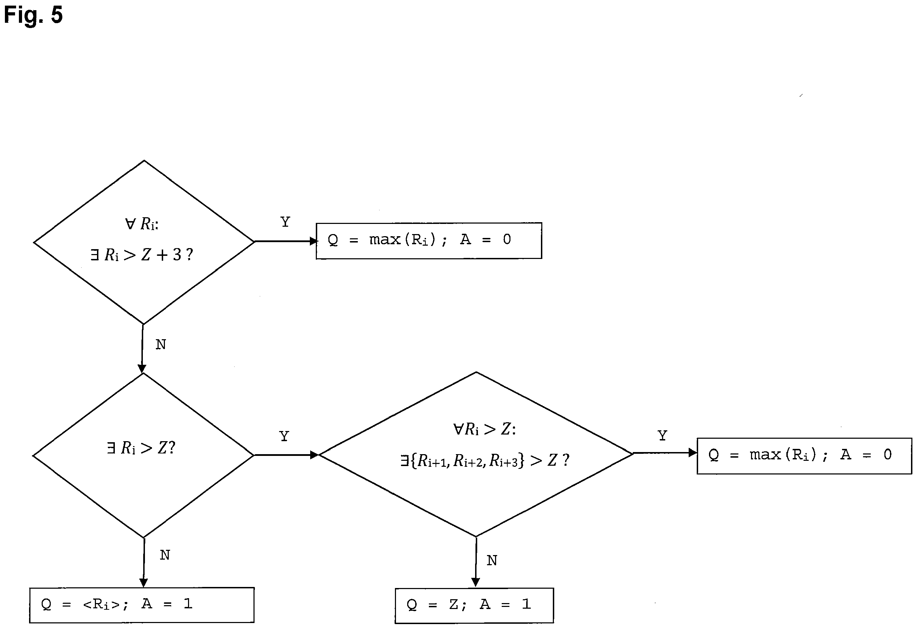

Der Ablauf eines beispielhaften Algorithmus für das soeben beschriebene Vorgehen wird im Folgenden unter Bezugnahme auf Fig. 5 beschrieben:

Im Folgenden bezeichne $R_i$ einen pro Schicht und Objektquerschnitt vorhandenen Güteindikatorwert im zweiten Datensatz 1020 und Q einen Wert des Qualitätsindikators. Weiterhin kennzeichne "Y", dass eine abgeprüfte Bedingung vorliegt und "N", dass eine abgeprüfte Bedingung nicht vorliegt. Gemäß dem beispielhaften Algorithmus wird nun wie folgt vorgegangen:

Zunächst wird für jeden vorhandenen Güteindikatorwert $R_i$ im zweiten Datensatz 1020 abgeprüft, ob er die Bedingung $R_i > Z+3$ erfüllt. Falls dies für einen oder mehrere Güteindikatorwerte der Fall ist, wird dem Qualitätsindikator Q der Maximalwert der die Bedingung erfüllenden Güteindikatorwerte $R_i$ zugewiesen, dem Akzeptanzindikator wird der Wert 0 zugewiesen (eine nichtakzeptable Qualität kennzeichnend) und der Algorithmus endet. Im vorliegenden Beispiel wird also ein Güteindikatorwert $R_i$, der den Güteindikatorgrenzwert Z um mehr als 3 Bewertungsstufen überschreitet, als Indiz dafür genommen, dass die Prozessirregularität in der zugehörigen Schicht so gravierend war, dass der entstehende Bauteilfehler nicht ausheilbar ist und das Bauteil als Ganzes eine schlechte Qualität aufweist, die in einem Qualitätsindikatorwert zum Ausdruck kommt, der den gleichen Wert wie der schlechteste Güteindikatorwert $R_i$ hat. Es sei angemerkt, dass der obige Ausdruck "Z+3" nur beispielhaft genannt ist. Man hätte natürlich auch den Term zu "Z+2", "Z+4" etc. wählen können oder ein anderes sofortiges Abbruchkriterium aufgrund mangelnder Qualität wählen können.

Falls, mit dem Beispiel fortfahrend, die Bedingung $R_i > Z+3$ für keinen der Güteindikatorwerte erfüllt ist, wird abgeprüft, ob es einen oder mehrere Güteindikatorwerte $R_i$ im zweiten Datensatz 1020 gibt, die den Güteindikatorgrenzwert Z überschreiten. Ist dies nicht der Fall, so wird dem Qualitätsindikator Q der Mittelwert aller im zweiten Datensatz vorhandenen Güteindikatorwert $R_i$ als Wert zugewiesen (Q=<$R_i$>). Ferner wird dem Akzeptanzindikator A der Wert 1 zugewiesen (eine akzeptable Qualität kennzeichnend) und der Algorithmus endet. Sollten für den Qualitätsindikator Q nur ganzzahlige Werte zugelassen sein, wird der Mittelwert vor der Zuweisung an den Qualitätsindikator Q noch gerundet (in Fig. 5 nicht dargestellt).

Falls es Güteindikatorwerte $R_i$ gibt, die den Güteindikatorgrenzwert Z überschreiten, so wird für jeden dieser Güteindikatorwerte abgeprüft, ob eventuell in den nachfolgenden Schichten ein Ausheilvorgang stattgefunden hat. Dies bedeutet, es wird für jeden dieser Güteindikatorwerte $R_i$ abgeprüft, ob die Güteindikatorwerte $R_{i+1}$, $R_{i+2}$, $R_{i+3}$ ebenfalls den Güteindikatorgrenzwert Z überschreiten. (In diesem Beispiel erfolgt die Abprüfung jeweils für die nachfolgenden drei Schichten, die Abprüfung könnte jedoch auch für eine andere Anzahl von nachfolgenden Schichten, z.B. zwei oder vier, etc. Schichten, erfolgen.) Sofern in keiner dieser nachfolgenden Schichten die entsprechenden Güteindikatorwerte den Güteindikatorgrenzwert Z überschreiten, wird angenommen, dass die mangelnde Prozessgüte in der Schicht i wieder ausgeheilt wurde, dem Qualitätsindikator Q wird der Wert des Güteindikatorgrenzwerts Z zugewiesen, dem Akzeptanzindikator A wird der Wert 1 zugewiesen (eine akzeptable Qualität kennzeichnend) und der Algorithmus endet. Trotz der angenommenen Ausheilung wird also dennoch angenommen, dass das Bauteil nicht eine besonders gute Bauteilqualität aufweist, wobei der Qualitätsindikator Q allgemein gesprochen in einem solchen Falle nicht "besser" sein darf als der Güteindikatorgrenzwert Z.

Wenn es den Güteindikatorgrenzwert Z überschreitende Güteindikatorwerte $R_i$ gibt, bei denen keine Ausheilung in nachfolgenden Schichten zuerkannt wird, dann wird dem Qualitätsindikator Q der Maximalwert dieser Güteindikator-werte $R_i$ als Wert zugewiesen, dem Akzeptanzindikator wird der Wert 0 zugewiesen (eine nichtakzeptable Qualität kennzeichnend) und der Algorithmus endet. Es sei angemerkt, dass in Fig. 5 an der entsprechenden Stelle im Diagramm der Ausdruck "max($R_i$)" nicht das Maximum aller Güteindikatorwerte Ri darstellt, sondern lediglich das Maximum jener, für die keine Ausheilung zuerkannt wurde.

Natürlich sind verschiedenartige Variationen des oben präsentierten Beispiels möglich. Man erkennt jedoch, dass das vorliegende Vorgehen über eine einfache Mittelwertbildung über die Güteindikatorwerte hinausgeht und eine zuverlässigere Zuordnung von Qualitätsindikatoren zu Bauteilen ermöglicht.

Das oben beschriebene Verfahren legt zunächst lediglich einen Qualitätsindikatorwert Q für ein Objekt fest. Ab wann ein Objekt als Objekt mit akzeptabler Qualität angesehen wird, hängt dann einfach davon ab, wo die Grenze für die Akzeptanz eines Objekts innerhalb des Wertebereichs für den Qualitätsindikator gezogen wird.

Ein Vorteil der vorliegenden Erfindung besteht insbesondere auch darin, dass zur Ermittlung eines die Bauteilqualität anzeigenden Qualitätsindikatorwertes alle zweiten Datensätze 1020, von denen jeder einer Prozessüberwachungsvorrichtung zugeordnet sind, herangezogen werden können. Es wird auf der Grundlage unterschiedlicher Prozessüberwachungssysteme eine Gesamtaussage über die Prozessqualität bei der Herstellung eines Objekts gewonnen. Insbesondere ist es möglich, zunächst für jeden zweiten Datensatz 1020 separat einen Einzel-Qualitätsindikatorwert EQ zu ermitteln und dann auf der Basis dieser einzeln ermittelten Einzel-Qualitätsindikatorwerte einen Qualitätsindikatorwert Q (für die Gesamtqualität) zu ermitteln.

Dabei können für die Ermittlung des Qualitätsindikatorwerts Q die Einzel-Qualitätsindikatorwerte EQ mit einem Wichtungsfaktor versehen werden, wodurch sie in unterschiedlichem Maße für die Ermittlung des Qualitätsindikatorwerts Q berücksichtigt werden. Alternativ ist es natürlich auch möglich, zunächst pro Objekt und Schicht einen Gesamt-Güteindikatorwert zu ermitteln unter Berücksichtigung aller vorhandenen zweiten Datensätze 1020. In letzterem Falle würde dann aus den pro Schicht und Objekt ermittelten Gesamt-Güteindikatorwerten ein Qualitätsindikatorwert Q ermittelt.

Ein besonderer Vorteil des erfindungsgemäßen Vorgehens ist weiterhin, dass Konflikte zwischen den von den einzelnen Prozessüberwachungssystemen gelieferten Prozessirregularitätsinformationen automatisch aufgelöst werden können durch geeignete Wahl von Wichtungsfaktoren. Alternativ könnte man auch weitere Bedingungen abprüfen, beispielsweise, ob zwei unterschiedliche Prozessüberwachungsvorrichtungen für die gleichen Stellen in einer Schicht eines Objekts eine Prozessirregularität anzeigen usw.

Mit dem erfindungsgemäßen Vorgehen kann aus einer mangelnden Prozessqualität bei der Herstellung eines Bauteils auf eine mangelhafte Bauteilqualität geschlossen werden. Dabei kann sich auch ergeben, dass es während des Herstellungsverfahrens bestimmte Schichten gibt, in denen die Prozessqualität unzureichend ist. So etwas würde sich auf alle innerhalb eines Bauvorgangs hergestellten Objekte auswirken, welche Objektquerschnitte in diesen Schichten aufweisen. In einer Abwandlung der Erfindung kann daher vor der Ermittlung von Qualitätsindikatorwerten zunächst anhand der zweiten Datensätze 1020 ein Schichtgüteindikatorwert $S_i$ pro Schicht (also unabhängig von einem spezifischen Objektquerschnitt in der Schicht) ermittelt werden, z.B. durch Mittelwertbildung der relativen Häufigkeiten von Prozessirregularitäten über alle Objektquerschnitte oder durch Mittelwertbildung über die Güteindikatorwerte $R_i$, die den einzelnen Objektquerschnitten in einer Schicht zugeordnet sind oder aber auch durch Wahl des schlechtesten Güteindikatorwerts $R_i$ als Güteindikatorwert $S_i$ für eine Schicht.

Bei einer weiteren Abwandlung des mit Bezug auf Fig. 3 und 4 beschriebenen Vorgehens kann anstelle oder zusätzlich zur Ermittlung eines Güteindikatorwerts $R_i$ pro Objektquerschnitt eine relative Häufigkeit von Prozessirregularitäten für einen Teilbereich eines Objektquerschnitts (Teilobjektquerschnitts) in einer Schicht ermittelt werden und daraus dann ein Güteindikatorwert $R_j$ für diesen Teilbereich ermittelt werden. Bei solch einem Vorgehen kann entweder lediglich ein im Vorhinein vorgegebener Teilbereich eines Objektquerschnitts für die Beurteilung der Bauteilqualität herangezogen werden, oder aber es werden innerhalb eines Objektquerschnitts für mehrere Teilbereiche dieses Objektquerschnitts relative Häufigkeiten von Prozessirregularitäten ermittelt und entsprechend jedem Teilbereich ein Teilbereichs-Güteindikatorwert $R_j$ zugeordnet. Auf diese Weise können gezielter Prozessfehler an einer ganz bestimmten Stelle bei der Herstellung eines Objekts erkannt werden oder aber nur besonders kritische Stellen für die Beurteilung der Objektqualität herangezogen werden. Man könnte auch einen Güteindikatorwert $R_i$ eines Objektquerschnitts herabstufen, wenn für den Teilbereich ein schlechterer Güteindikatorwert $R_j$ vorhanden ist. Bei dem erwähnten Teilbereich eines Objektquerschnitts kann es sich insbesondere um einen Belichtungsstreifen oder ein belichtetes Quadrat handeln, falls ein Objektquerschnitt streifenweise bzw. Quadrat für Quadrat belichtet wird. Zur Vermeidung von Missverständnissen sei darauf hingewiesen, dass mit einem Streifen nicht eine linienförmige Belichtung gemeint ist, wie sie beispielsweise beim sogenannten "Hatching" auftritt.

Bei der obigen Beschreibung des erfindungsgemäßen Verfahrens und der erfindungsgemäßen Vorrichtung zur Ermittlung eines Qualitätsindikators Q wird Bezug genommen auf das Vorliegen von ersten Datensätzen und zweiten Datensätzen. Es sei hier erwähnt, dass die vorliegende Erfindung natürlich nicht darauf beschränkt ist, dass ein oben definierter erster Datensatz 1010 zunächst irgendwo abgespeichert ist und ein oben definierter zweiter Datensatz 1020 explizit an einer anderen Stelle abgespeichert wird. Bei den Daten des ersten Datensatzes 1010 und des zweiten Datensatzes 1020 kann es sich auch um in einem flüchtigen Speicher einer Datenverarbeitungseinrichtung vorliegende Informationen handeln, die lediglich als kurzfristiges Berechnungsergebnis vorliegen und sofort weiterverarbeitet werden. Insbesondere muss nicht ein vollständiger erster und zweiter Datensatz irgendwo in einem Speicher vorliegen, der Informationen über alle Schichten und Objekte aufweist. Im Prinzip reicht es schon, wenn lediglich Informationen über die Prozessirregularitäten und Güteindikatorwerte zumindest für eine Schicht und einen Objektquerschnitt zeitweilig vorhanden sind (sozusagen als Zwischenergebnis, auf Basis dessen ggf. auch der Abbruch des Herstellungsprozesses des jeweiligen Objekts bzw. aller Objekte (beispielsweise automatisch) abgeleitet werden kann). Natürlich ist aber das erfindungsgemäße Verfahren übersichtlicher, wenn Bezug genommen wird auf einen in einem Speicher vorliegenden ersten Datensatz 1010 und einen in einem Speicher vorliegenden zweiten Datensatz 1020.

Bei einer zweiten Ausführungsform der Erfindung ist die in Fig. 3 gezeigte Ermittlungseinheit 1002 nicht in der Vorrichtung 1000 zur Ermittlung eines Qualitätsindikators Q vorhanden, sondern in jeder der in Fig. 1 und 2 gezeigten Prozessüberwachungsvorrichtungen 101. Ebenso ist die Generierungseinheit 1003 in jeder der Prozessüberwachungsvorrichtungen 101 anstelle der Vorrichtung 1000 vorhanden. Das mit Bezugnahme auf Fig. 4 beschriebene Verfahren ändert sich dabei aber nicht notwendigerweise. Vielmehr ermittelt jede Prozessüberwachungsvorrichtung 101 separat einen Güteindikatorwert $R_i$ pro Objektquerschnitt und Schicht und generiert selbst einen zweiten Datensatz 1020, der diese Informationen enthält. In der Vorrichtung 1000 stellt dann die Bereitstellungseinheit 1001 die entsprechenden zweiten Datensätze von den Prozessüberwachungsvorrichtungen 101 der Qualitätsindikator-Ermittlungseinheit 1004 zur Verfügung, und diese ermittelt, wie weiter oben bereits beschrieben, unter Verwendung der Anzahl an zweiten Datensätzen 1020 einen Qualitätsindikatorwert Q.

Optional kann auch eine Qualitätsindikator-Ermittlungseinheit 1004 in einer Prozessüberwachungsvorrichtung 101, beispielsweise auch in jeder Prozessüberwachungsvorrichtung 101, ausgebildet sein. In solch einem Fall ermittelt jede Prozessüberwachungsvorrichtung 101 selbst einen Einzel-Qualitätsindikator EQ. Als Folge kann entweder auf eine separate Vorrichtung 1000 zur Bestimmung eines Qualitätsindikators Q verzichtet werden (die Prozessüberwachungsvorrichtung 101 ist dann selbst eine Vorrichtung zur Bestimmung eines Qualitätsindikators) oder aber eine eigene Vorrichtung 1000 ermittelt einen Qualitätsindikatorwert Q für ein oder mehrere hergestellte Objekte, bevorzugt für jedes der hergestellten Bauteile unter Zugrundelegung der von den einzelnen Prozessüberwachungsvorrichtungen 101 zunächst ermittelten Einzel-Qualitätsindikatorwerte EQ. Bei der Ermittlung des Qualitätsindikatorwertes Q können wiederum die für die einzelnen Prozessüberwachungsvorrichtungen zunächst ermittelten Einzel-Qualitätsindikatorwerte EQ mit Wichtungsfaktoren versehen werden. In einer Abwandlung ist es auch denkbar, einen Vertrauensindikator zu ermitteln, der anzeigt, ob die Einzel-Qualitätsindikatoren EQ der einzelnen Prozessüberwachungsvorrichtungen 101 einander widersprechen oder sehr ähnlich zueinander sind.

Wie man anhand der zweiten Ausführungsform erkennt, gibt es verschiedene Möglichkeiten für eine Realisierung der Vorrichtung 1000 zur Ermittlung eines Qualitätsindikators Q. Man erkennt, dass die Komponenten 1001, 1002, 1003, 1004 auch über mehrere physische Vorrichtungen verteilt werden können und dennoch die Komponenten 1001, 1002, 1003, 1004 in ihrem Zusammenwirken als Vorrichtung 1000 zur Ermittlung eines Qualitätsindikators angesehen werden können.

Bei den oben beschriebenen Ausführungsformen und Abwandlungen derselben ist es möglich, einen Nutzer einen oder mehrere Parameter des Verfahrens (beispielsweise über eine Eingabeeinheit) vorgeben zu lassen. Beispielsweise können die Wichtungsfaktoren für die Berücksichtigung der von den einzelnen Prozessüberwachungsvorrichtungen gelieferten Irregularitätsinformationen bzw. Güteindikatorwerte von einem Nutzer vorgegeben werden. Des Weiteren kann auch ein Güteindikatorgrenzwert Z (unter Umständen separat für jede Prozessüberwachungsvorrichtung) vorgegeben werden. Weiterhin kann optional auch eine graphische Darstellung der den einzelnen Schichten zugeordneten Irregularitätsinformationen erfolgen bzw. alternativ eine graphische Darstellung der den einzelnen Schichten und Objektquerschnitten zugeordneten Güteindikatorwerte $R_i$. Eine Visualisierung der Irregularitätsinformationen in Abhängigkeit von der Position innerhalb einer Schicht kann (insbesondere bei farblicher Darstellung) es einem Fachmann erleichtern, die Güte eines Herstellungsprozesses und die Qualität der Objekte schnell zu erkennen und ggf. auch auf einfache Weise sofort zu erkennen, ob beispielsweise in einem bestimmten Bereich der Schichten Probleme auftreten, die dann möglicherweise auf Probleme in diesem Bereich der Baukammer zurückzuführen sind.

Auch wenn für die Güteindikatoren oder Qualitätsindikatoren bislang nur Wertebereiche genannt wurden, bei denen es sich um Teilmengen der natürlichen Zahlen (ggf. einschließlich der Null) handelt, z.B. die Zahlen 1 bis 6, 5 bis 10, etc., können die entsprechenden Wertebereiche auch andere Mengen sein, z.B. Buchstaben, etc., sofern nur eine Ordnungsrelation zwischen den Mitgliedern der entsprechenden Menge besteht.

Auch wenn in Fig. 1 als Beispiel einer generativen Schichtbauvorrichtung eine Lasersinter- bzw. Laserschmelzvorrichtung beschrieben wurde, ist die Erfindung nicht auf das Lasersintern oder Laserschmelzen eingeschränkt. Sie kann im Zusammenhang mit beliebigen Verfahren zum generativen Herstellen eines dreidimensionalen Objektes durch schichtweises Aufbringen und selektives Verfestigen eines Aufbaumaterials angewendet werden. Hier seien lediglich beispielhaft das Laserschmelzen, LLM (Ausschneiden aus Folien und Fügen), FLM (Aufbringen eines thermoplastischen Materials aus einer Düse), 3D-Drucken, Maskensinterverfahren und stereolithografische Verfahren genannt.

Die Belichtungsvorrichtung kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann an Stelle eines Lasers jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen.

Schließlich sei noch erwähnt, dass der in Fig. 1 gezeigte Aufbau einer Lasersinter- oder schmelzvorrichtung nur beispielhaft ist und natürlich auch abgewandelt werden kann.

Als Aufbaumaterial können verschiedene Materialien verwendet werden, vorzugsweise Pulver, insbesondere Metallpulver, Kunststoffpulver, Keramikpulver, Sand, gefüllte oder gemischte Pulver oder Photopolymere.

Abschließend sei noch erwähnt, dass eine Vorrichtung 1000 zur Ermittlung eines Qualitätsindikators entweder allein durch Softwarekomponenten oder aber auch aus Mischungen aus Hard- und Software realisiert sein kann. In der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise, wenn die darüber eingespeisten bzw. ausgegebenen Daten von bereits auf dem gleichen Gerät realisierten anderen Komponenten übernommen werden können oder an eine andere Komponente nur softwaremäßig übergeben werden müssen. Außerdem können mehrere Schnittstellen auch in einer gemeinsamen Schnittstelle, beispielsweise einer Input-Output-Schnittstelle, zusammengefasst sein. Ferner kann die Vorrichtung 1000 in eine Steuereinrichtung 29 einer generativen Schichtbauvorrichtung integriert sein

**Patentansprüche**

1.  Verfahren zur Ermittlung eines Qualitätsindikators eines mittels eines generativen Schichtbauverfahrens hergestellten Objekts, wobei in dem generativen Schichtbauverfahren das Objekt Schicht für Schicht hergestellt wird durch Verfestigung eines Aufbaumaterials an den dem Querschnitt des Objekts in einer Schicht entsprechenden Stellen, wobei das Verfahren mindestens die folgenden Schritte aufweist:

    einen Schritt (S1) des Bereitstellens eines ersten Datensatzes (1010), der einer Prozessüberwachungsvorrichtung zugeordnet ist, wobei in dem ersten Datensatz (1010) für mehrere im Zuge der Herstellung aufeinanderfolgende Schichten, insbesondere unmittelbar aufeinanderfolgende Schichten, einer vordefinierten Anzahl von verfestigten Stellen einer Schicht jeweils eine von der dem Datensatz zugeordneten Prozessüberwachungsvorrichtung ermittelte Prozessirregularitätsinformation zugeordnet ist,
    einen Schritt (S2) des Ermittelns einer relativen Häufigkeit eines Vorliegens einer Prozessirregularität in einer Schicht für die mehreren aufeinanderfolgenden Schichten und des Zuweisens eines Güteindikatorwerts ($R_i$, $S_i$) zu dem verfestigten Objektquerschnitt in einer Schicht entsprechend der ermittelten relativen Häufigkeit, wobei unterschiedlichen Wertebereichen der relativen Häufigkeiten unterschiedliche Güteindikatorwerte ($R_i$, $S_i$) zugeordnet sind, die unterschiedliche Qualitätsstufen anzeigen und

EP 3 488 305 B1

einen Schritt (S3) des Generierens eines zweiten Datensatzes (1020), in dem, basierend auf den Zuweisungen der Güteindikatorwerte ($R_i$, $S_i$) zu den einzelnen Schichten in Schritt S2, dem Objektquerschnitt in jeder einzelnen der mehreren aufeinanderfolgenden Schichten ein Güteindikatorwert zugewiesen ist, und

einen Schritt (S4) des Ermittelns eines die Qualität des hergestellten Objekts anzeigenden Qualitätsindikators (Q) unter Verwendung des zweiten Datensatzes (1020).

2. Verfahren nach Anspruch 1, wobei es sich bei dem generativen Schichtbauverfahren um ein Verfahren handelt, bei dem pulverförmiges Aufbaumaterial mittels Wärmezufuhr zu den dem Querschnitt des Objekts in einer Schicht entsprechenden Stellen verfestigt wird, indem die Schicht selektiv mit Energiestrahlung abgetastet wird, und die von der Prozessüberwachungsvorrichtung ermittelte Prozessirregularitätsinformation anzeigt, ob an einer Stelle der Schicht beim Abtasten derselben mittels der Energiestrahlung eine Prozessirregularität auftrat.

3. Verfahren gemäß einem der Ansprüche 1 oder 2, wobei die relative Häufigkeit durch Bestimmung des Flächenanteils der Stellen eines Objekts, an denen eine Prozessirregularität auftrat, bezogen auf die Gesamtfläche des Objektquerschnitts, ermittelt wird.

4. Verfahren gemäß einem der Ansprüche 1 oder 2, wobei ermittelt wird, ob eine Stelle in einer Schicht, der eine Prozessirregularitätsinformation zugeordnet ist, sich innerhalb eines Teilobjektquerschnitts befindet und, falls dies der Fall ist, die relative Häufigkeit des Vorliegens einer Prozessirregularität bezogen auf den Teilobjektquerschnitt ermittelt wird und dem Teilobjektquerschnitt ein Teilgüteindikatorwert ($R_j$) zugeordnet wird.

5. Verfahren nach Anspruch 3, wobei zusätzlich ermittelt wird, ob eine Stelle in einer Schicht, der eine Prozessirregularitätsinformation zugeordnet ist, sich innerhalb eines Teilobjektquerschnitts befindet und, falls dies der Fall ist, die relative Häufigkeit des Vorliegens einer Prozessirregularität bezogen auf den Teilobjektquerschnitt ermittelt wird und dem Teilobjektquerschnitt ein Teilgüteindikatorwert ($R_j$) zugeordnet wird und wobei ein dem Objektquerschnitt in einer Schicht zugeordneter Güteindikatorwert ($R_i$) durch einen eine niedrigere Qualität anzeigenden Güteindikatorwert ersetzt wird, falls der dem Teilobjektquerschnitt zugeordnete Teilgüteindikatorwert eine niedrigere Qualität anzeigt als der dem gesamten Objektquerschnitt zugeordnete Güteindikatorwert ($R_i$).

6. Verfahren nach einem der Ansprüche 1 bis 5, wobei eine Mehrzahl von Qualitätsindikatoren (Q) für eine entsprechende Mehrzahl von mittels eines generativen Schichtbauverfahrens gemeinsam hergestellten Objekten ermittelt wird.

7. Verfahren nach Anspruch 6, wobei im Schritt (S2) allen Objektquerschnitten in einer Schicht als Güteindikatorwert ein Schichtgüteindikatorwert (Si) zugewiesen wird.

8. Verfahren gemäß einem der Ansprüche 1 bis 7, wobei im Schritt (S1) eine Anzahl von weiteren ersten Datensätzen (1010) bereitgestellt wird, von denen jeder einer Prozessüberwachungsvorrichtung zugeordnet ist, im Schritt (S2) für jeden ersten Datensatz (1010) den Objektquerschnitten in den mehreren aufeinanderfolgenden Schichten jeweils ein Güteindikatorwert ($R_i$) zugewiesen wird, im Schritt (S3) basierend auf den Zuweisungen im Schritt (S2) eine Mehrzahl von zweiten Datensätzen (1020) generiert wird und im Schritt (S4) zur Ermittlung eines Qualitätsindikators (Q) für ein Objekt zunächst für jeden zweiten Datensatz ein Einzel-Qualitätsindikatorwert (EQ) ermittelt wird und ein Qualitätsindikatorwert (Q) anhand der Einzel-Qualitätsindikatorwerte (EQ) ermittelt wird, bevorzugt durch Versehen der Einzel-Qualitätsindikatorwerte (EQ) mit Wichtungsfaktoren.

9. Verfahren gemäß einem der Ansprüche 1 bis 7, wobei im Schritt (S1) eine Mehrzahl von ersten Datensätzen (1010) bereitgestellt wird, von denen jeder einer Prozessüberwachungsvorrichtung zugeordnet ist, im Schritt (S2) für jeden ersten Datensatz (1010) den Objektquerschnitten in den mehreren aufeinanderfolgenden Schichten jeweils ein Güteindikatorwert (Ri) zugewiesen wird, im Schritt (S3) basierend auf den Zuweisungen im Schritt (S2) eine Mehrzahl von zweiten Datensätzen (1020) generiert wird und im Schritt (S4) zur Ermittlung eines Qualitätsindikators (Q) für ein Objekt zunächst ein Gesamt-Güteindikatorwert für einen Objektquerschnitt in einer Schicht basierend auf der Mehrzahl von zweiten Datensätzen (1020) ermittelt wird, bevorzugt durch Versehen der einzelnen einem Objektquerschnitt zugeordneten Güteindikatorwerte ($R_i$) mit Wichtungsfaktoren, und nachfolgend der Qualitätsindikator (Q) für das Objekt basierend auf den ermittelten Gesamt-Güteindikatorwerten ermittelt wird.

10. Verfahren gemäß einem der Ansprüche 1 bis 9, wobei ein einem Objektquerschnitt in einer Schicht zugeordneter Güteindikatorwert oder Gesamt-Güteindikatorwert durch einen eine höhere Qualität anzeigenden Güteindikatorwert bzw. Gesamt-Güteindikatorwert ersetzt wird, falls den diesem Objekt zugeordneten Objektquerschnitten in mindestens n folgenden Schichten, bevorzugt n unmittelbar folgenden Schichten, ein eine höhere Qualität anzeigender Güteindikatorwert bzw. Gesamt-Güteindikatorwert zugeordnet ist, wobei n eine natürliche vordefinierte Zahl ist.

11. Verfahren gemäß einem der Ansprüche 1 bis 10, wobei wie folgt abgeleitet wird, ob ein Objekt eine akzeptable Qualität aufweist:

Festlegen eines Güteindikatorgrenzwerts (Z) und Vergleichen der Güteindikatorwerte bzw. Gesamt-Güteindikatorwerte für die Objektquerschnitte des Objekts in den einzelnen Schichten mit dem Güteindikatorgrenzwert (Z),
Bewerten der Qualität des Objekts nur dann als akzeptabel, wenn keiner der Güteindikatorwerte bzw. Gesamt-Güteindikatorwerte einer niedrigeren Qualitätsstufe zugeordnet ist als der Güteindikatorgrenzwert (Z).

12. Verfahren gemäß einem der Ansprüche 1 bis 11, wobei der Qualitätsindikator (Q) ein Element aus einer Menge von Qualitätsmaßanzeigern ist, deren Mächtigkeit größer Eins ist und zwischen deren Mitgliedern eine Ordnungsrelation besteht.

13. Vorrichtung (1000) zur Ermittlung eines Qualitätsindikators eines mittels eines generativen Schichtbauverfahrens hergestellten Objekts, wobei in dem generativen Schichtbauverfahren das Objekt Schicht für Schicht hergestellt wird durch Verfestigung eines Aufbaumaterials an den dem Querschnitt des Objekts in einer Schicht entsprechenden Stellen, wobei die Vorrichtung mindestens aufweist:

eine Bereitstellungseinheit (1001) zum Bereitstellen eines ersten Datensatzes (1010), der einer Prozess-Überwachungsvorrichtung zugeordnet sind, wobei in dem ersten Datensatz (1010) für mehrere im Zuge der Herstellung aufeinanderfolgende Schichten, insbesondere unmittelbar aufeinanderfolgende Schichten, einer vordefinierten Anzahl von verfestigten Stellen einer Schicht jeweils eine von der dem Datensatz zugeordneten Prozess-Überwachungsvorrichtung ermittelte Prozessirregularitätsinformation zugeordnet ist,
eine Ermittlungseinheit (1002), die dazu eingerichtet ist, eine relative Häufigkeit des Vorliegens einer Prozessirregularität in einer Schicht für die mehreren aufeinanderfolgenden Schichten zu ermitteln und dem verfestigten Objektquerschnitt in einer Schicht entsprechend der ermittelten relativen Häufigkeit jeweils einen Güteindikatorwert ($R_i$, $S_i$) zuzuweisen
wobei unterschiedlichen Wertebereichen der relativen Häufigkeiten unterschiedliche Güteindikatorwerte ($R_i$, $S_i$) zugeordnet sind, die unterschiedliche Qualitätsstufen anzeigen und
eine Generierungseinheit (1003), die dazu eingerichtet ist, einen zweiten Datensatz (1020) zu generieren, in dem dem Objektquerschnitt in jeder einzelnen der mehreren aufeinanderfolgenden Schichten ein Güteindikatorwert ($R_i$, $S_i$) zugewiesen ist, und
eine Ermittlungseinheit (1004) zum Ermitteln eines die Qualität des hergestellten Objekts anzeigenden Qualitätsindikators (Q) unter Verwendung des zweiten Datensatzes (1020).

14. Prozessüberwachungsvorrichtung (101) zur Ermittlung des Vorliegens von Prozessirregularitäten in einem generativen Schichtbauverfahren, bei dem die Objekte Schicht für Schicht hergestellt werden durch Verfestigung eines Aufbaumaterials an den dem Querschnitt eines Objekts in einer Schicht entsprechenden Stellen, wobei die Prozessüberwachungsvorrichtung eine Vorrichtung nach Anspruch 13 aufweist sowie weiterhin aufweist:

eine Irregularitätsermittlungseinheit (110), die dazu eingerichtet ist, für eine vordefinierte Anzahl von mit einer Energiestrahlung abgetasteten Stellen einer Schicht jeweils eine Irregularitätsermittlung eines Vorliegens einer Prozessirregularität in Bezug auf mindestens einen Prozessparameter bei der Herstellung durchzuführen, wobei es sich bei der Irregularitätsermittlungseinheit (110) bevorzugt um eine Schichtüberwachungseinheit und/oder eine photodiodenbasierte Schmelzbadüberwachungseinheit und/oder eine optische Tomographieeinheit handelt, und
eine Prozessirregularitäts-Dokumentationseinheit (111), die dazu eingerichtet ist, einen ersten Datensatz (1010) zu generieren, in welchem für mehrere aufeinanderfolgende Schichten, bevorzugt alle Schichten, einer vordefinierten Anzahl von mit der Energiestrahlung abgetasteten Stellen einer Schicht jeweils eine Prozessirregularitätsinformation zugeordnet ist, die anzeigt, ob bei der Verfestigung des Aufbaumaterials an dieser Stelle eine Prozessirregularität auftrat.

15. Vorrichtung zur Herstellung mindestens eines dreidimensionalen Objekts mittels eines generativen Schichtbauverfahrens, wobei in dem generativen Schichtbauverfahren die Objekte Schicht für Schicht hergestellt werden durch Verfestigung eines Aufbaumaterials an den dem Querschnitt eines Objekts in einer Schicht entsprechenden Stellen, umfassend:

eine Abtasteinheit (23) zum Abtasten von einem Querschnitt des herzustellenden Objektes entsprechenden Stellen einer aufgebrachten Schicht des Aufbaumaterials (11) mit einer Energiestrahlung zum selektiven Verfestigen des Aufbaumaterials,
eine Vorrichtung nach Anspruch 13 und/oder eine Prozessüberwachungsvorrichtung nach Anspruch 14.

16. Computerprogramm, das in eine programmierbare Steuereinheit und/oder Vorrichtung ladbar ist, mit Programmcodemitteln, um alle Schritte eines Verfahrens gemäß einem der Ansprüche 1 bis 12 auszuführen, wenn das Computerprogramm ausgeführt wird.

**Claims**

1. A method of determining a quality indicator of an object that has been manufactured by means of a layer-wise additive manufacturing method, wherein in said layer-wise additive manufacturing method the object is manufactured layer by layer by a solidification of a building material at the positions corresponding to the cross-section of the object in a layer, wherein the method comprises at least the following steps:

a step (S1) of providing a first dataset (1010) that is assigned to a process monitoring device, wherein in the first dataset (1010) for several layers following upon one another during the course of the manufacture, in particular layers following immediately upon one another, a process irregularity information detected by the process monitoring device assigned to the dataset is assigned to each of a pre-defined number of solidified positions of a layer,
a step (S2) of detecting for said several layers following upon one another a relative frequency of occurrence of a process irregularity in a layer and of assigning a grade indicator value ($R_i$, $S_i$) to the solidified object cross-section in a layer according to the detected relative frequency,
wherein to different ranges of values of the relative frequency different grade indicator values ($R_i$, $S_i$) indicating different quality levels are assigned and
a step (S3) of generating a second dataset (1020), in which based on the assignments of the grade indicator values ($R_i$, $S_i$) to the individual layers in step S2 a grade indicator value is assigned to the object cross-section in each individual layer of said several layers following upon one another, and
a step (S4) of determining a quality indicator (Q) by using the second dataset (1020), said quality indicator (Q) indicating the quality of the manufactured object.

2. The method according to claim 1, wherein said layer-wise additive manufacturing method is a method in which a building material in powder form is solidified by a supply of heat to the positions corresponding to the cross-section of the object in a layer by selectively scanning the layer with energy radiation, and
wherein said process irregularity information detected by said process monitoring device indicates whether a process irregularity occurred at a position of the layer when said position was scanned.

3. The method according to one of claims 1 or 2, wherein said relative frequency is detected by determining the area ratio of the positions of an object at which a process irregularity occurred in relation to the total area of the object cross-section.

4. The method according to one of claims 1 or 2, wherein it is determined whether a position in a layer, to which position a process irregularity has been assigned, is located within a partial object cross-section and if this is the case the relative frequency of the occurrence of a process irregularity is determined in relation to said partial object cross-section and a partial grade indicator value ($R_j$) is assigned to said partial object cross-section.

5. The method according to claim 3, wherein it is additionally determined whether a position in a layer, to which position a process irregularity has been assigned, is located within a partial object cross-section and if this is the case the relative frequency of the occurrence of a process irregularity is determined in relation to said partial object cross-section and a partial grade indicator value ($R_j$) is assigned to said partial object cross-section and
wherein a grade indicator value ($R_i$) assigned to the object cross-section in a layer is replaced by a grade indicator value indicating a lower value, if partial grade indicator value assigned to the partial object cross-section indicates a lower quality than the grade indicator value ($R_i$) assigned to the total object cross-section.

**6.** The method according to one of claims 1 to 5, wherein a plurality of quality indicators (Q) is determined for a corresponding plurality of objects that have been manufactured together by means of a layer-wise additive manufacturing method.

**7.** The method according to claim 6, wherein in step (S2) a layer grade indicator value ($S_i$) is assigned to all object cross-sections in a layer as grade indicator value.

**8.** The method according to one of claims 1 to 7, wherein in step (S1) a number of further first datasets (1010) is provided, each of which is assigned to a process monitoring device, wherein in step (S2) for each first dataset (1010) a grade indicator value ($R_i$) is assigned to each of the object cross-sections in said several layers following upon one another, wherein in step (S3) a plurality of second datasets (1020) is generated based on the assignments in step (S2) and wherein in step (S4) in order to determine a quality indicator (Q) for an object at first a single quality indicator value (EQ) is determined and a quality indicator value (Q) is determined based on the single quality indicator values (EQ), preferably by adding weighting factors to the single quality indicator values (EQ).

**9.** The method according to one of claims 1 to 7, wherein in step (S1) a plurality of first datasets (1010) is provided, each of which is assigned to a process monitoring device, wherein in step (S2) for each first dataset (1010) a grade indicator value ($R_i$) is assigned to each of the object cross-sections in said several layers following upon one another, wherein in step (S3) a plurality of second datasets (1020) is generated based on the assignments in step (S2) and wherein in step (S4) in order to determine a quality indicator (Q) for an object at first a total quality indicator value for an object cross-section in a layer is determined based on the plurality of second datasets, preferably by assigning weighting factors to the individual grade indicator values ($R_i$) assigned to an object cross-section, and then the quality indicator (Q) for the object is determined based on the determined total grade indicator values.

**10.** The method according to one of claims 1 to 9, wherein a grade indicator value or total grade indicator value assigned to an object cross-section in a layer is replaced by a grade indicator value and a total grade indicator value, respectively, if a grade indicator value or total grade indicator value indicating a higher quality is assigned to the object cross-sections belonging to this object in at least n following layers, preferably at least n immediately following layers, wherein n is a pre-defined natural number.

**11.** The method according to one of claims 1 to 10, wherein it is determined as follows whether an object has an acceptable quality:

setting a grade indicator limit value (Z) and comparing the grade indicator values and total grade indicator values, respectively, for the object cross-sections of the object in the individual layers with said grade indicator limit value (Z),
determining the quality of the object to be acceptable only if none of the grade indicator values and total grade indicator values, respectively, is assigned to a lower quality level than the grade indicator limit value (Z).

**12.** The method according to one of claims 1 to 11, wherein said quality indicator (Q) is an element of a set of quality degree indexes, wherein the cardinality of the set is larger than one and there exists an order relation between the members of the set.

**13.** A device (1000) of determining a quality indicator of an object that has been manufactured by means of a layer-wise additive manufacturing method, wherein in said layer-wise additive manufacturing method the object is manufactured layer by layer by a solidification of a building material at the positions corresponding to the cross-section of the object in a layer, wherein the method device comprises at least the following:

a provision unit (1001) of providing a first dataset (1010) that is assigned to a process monitoring device, wherein in the first dataset (1010) for several layers following upon one another in the course of manufacturing, in particular layers following immediately upon one another, a process irregularity information detected by the process monitoring device that is assigned to the dataset is assigned to each of a pre-defined number of solidified positions of a layer,
a detection unit (1002), adapted to detect for said several layers following upon one another a relative frequency of occurrence of a process irregularity in a layer and to assign a grade indicator value ($R_i$, $S_i$) to the solidified object cross-section in a layer according to the detected relative frequency,
wherein to different ranges of values of the relative frequency different grade indicator values ($R_i$, $S_i$) indicating different quality levels are assigned and

a generation unit (1003), adapted to generate a second dataset (1020), in which a grade indicator value (R$_i$, S$_i$) is assigned to the object cross-section in each individual layer of said several layers following upon one another, and

a determination unit (1004) of determining a quality indicator (Q) by using the second dataset (1020), said quality indicator (Q) indicating the quality of the manufactured object.

14. A process monitoring device (101) for detecting the occurrence of process irregularities in a layer-wise additive manufacturing method, wherein in said layer-wise additive manufacturing method the objects are manufactured layer by layer by a solidification of a building material at the positions corresponding to the cross-section of an object in a layer, wherein the process monitoring device comprises a device according to claim 13 and further comprises:

an irregularity detection unit (110), adapted to do for each of a pre-defined number of positions of a layer that have been scanned with energy radiation an irregularity detection of the occurrence of a process irregularity concerning at least one process parameter in the manufacture, wherein said irregularity detection unit (110) preferably is a layer monitoring unit and/or a photodiode-based melt pool monitoring unit and/or an optical tomography unit, and

a process irregularity documentation unit (111) adapted to generate a first dataset (1010), in which, for several layers following upon one another, in particular all layers, a process irregularity information is assigned to each of a pre-defined number of solidified positions of a layer that have been scanned with the energy radiation, said process irregularity information indicating, whether at that position a process irregularity occurred during the solidification of the building material.

15. A device of manufacturing at least one three-dimensional object by means of a layer-wise additive manufacturing method, wherein in said layer-wise additive manufacturing method the objects are manufactured layer by layer by a solidification of a building material at the positions corresponding to the cross-section of the object in a layer, said device comprising:

a scanning unit (23) for scanning positions of an applied layer of the building material (11) that correspond to the cross-section of the object by means of an energy radiation in order to selectively solidify the building material, a device according to claim 13 and/or a process monitoring device according to claim 14.

16. A computer program that is loadable into a programmable control unit and/or device and that has program code means implementing all steps of a method according to one of claims 1 to 12 when the computer program is executed.

**Revendications**

1. Un procédé pour déterminer un indicateur de qualité d'un objet fabriqué au moyen d'un procédé de construction générative en couches, l'objet étant fabriqué couche par couche dans le procédé de construction générative en couches en solidifiant un matériau de construction aux endroits correspondant à la section transversale d'un objet dans une couche, le procédé comprenant au moins les étapes suivantes :

une étape (S1) consistant à mettre à disposition un premier ensemble de données (1010) associé à un dispositif de surveillance de processus, dans laquelle une information d'irrégularité de processus déterminée par le dispositif de surveillance de processus associé à l'ensemble de données est associée dans le premier ensemble de données (1010) pour plusieurs couches successives au cours de la fabrication, en particulier pour des couches directement successives, respectivement à un nombre prédéfini d'endroits consolidés d'une couche, une étape (S2) consistant à déterminer une fréquence relative de présence d'une irrégularité de processus dans une couche pour les plusieurs couches successives et à associer une valeur d'indicateur de qualité (R$_i$, S$_i$) à la section transversale d'objet solidifiée dans une couche en fonction de la fréquence relative déterminée, dans lequel différentes valeurs d'indicateur de qualité (R$_i$, S$_i$) sont associées à différentes plages de valeurs des fréquences relatives qui indiquent différents niveaux de qualité, et une étape (S3) consistant à générer un deuxième ensemble de données (1020) dans lequel, sur la base des associations des valeurs d'indicateur de qualité (R$_i$, S$_i$) aux couches individuelles à l'étape S2, une valeur d'indicateur de qualité est associée à la section transversale de l'objet dans chacune des couches multiples successives, et une étape (S4) consistant à déterminer un indicateur de qualité (Q) indiquant la qualité de l'objet fabriqué en utilisant le deuxième ensemble de données (1020).

**2.** Le procédé selon la revendication 1, dans lequel le procédé de construction générative en couches est un procédé dans lequel un matériau de construction en poudre est solidifié par introduction de chaleur aux endroits correspondant à la section transversale de l'objet dans une couche, en balayant sélectivement la couche avec un rayonnement d'énergie, et

l'information d'irrégularité de processus déterminée par le dispositif de surveillance de processus indique si une irrégularité de processus s'était produite à un endroit de la couche lors du balayage de celle-ci au moyen du rayonnement d'énergie.

**3.** Le procédé selon l'une des revendications 1 ou 2, dans lequel la fréquence relative est déterminée par la détermination du pourcentage de surface des endroits d'un objet où une irrégularité de processus s'était produite, par rapport à la surface totale de la section transversale de l'objet.

**4.** Le procédé selon l'une des revendications 1 ou 2, dans lequel on détermine si un endroits dans une couche, auquel une information d'irrégularité de processus est associée, se trouve à l'intérieur d'une section transversale partielle d'objet et, si c'est le cas, on détermine la fréquence relative de la présence d'une irrégularité de processus par rapport à la section transversale partielle d'objet et on associe une valeur d'indicateur de qualité partielle ($R_j$) à la section transversale partielle d'objet.

**5.** Le procédé selon la revendication 3, dans lequel on détermine en outre si un endroit dans une couche, auquel est associé une information d'irrégularité de processus, se trouve à l'intérieur d'une section transversale partielle d'objet et, si c'est le cas, on détermine la fréquence relative de la présence d'une irrégularité de processus par rapport à la section transversale partielle d'objet et on associe à la section transversale partielle d'objet une valeur d'indicateur de qualité partielle ($R_j$) et

dans lequel une valeur d'indicateur de qualité ($R_i$) associée à la section transversale de l'objet dans une couche est remplacée par une valeur d'indicateur de qualité indiquant une qualité inférieure, si la valeur d'indicateur de qualité partielle associée à la section transversale partielle de l'objet indique une qualité inférieure à la valeur d'indicateur de qualité ($R_i$) associée à l'ensemble de la section transversale de l'objet.

**6.** Le procédé selon l'une quelconque des revendications 1 à 5, dans lequel une pluralité d'indicateurs de qualité (Q) est déterminée pour une pluralité correspondante d'objets fabriqués en commun au moyen d'un procédé de construction générative en couches.

**7.** Le procédé selon la revendication 6, dans lequel, à l'étape (S2), une valeur d'indicateur de qualité de couche (Si) est associée à toutes les sections transversales d'objet dans une couche comme valeur d'indicateur de qualité.

**8.** Le procédé selon l'une quelconque des revendications 1 à 7, dans lequel, à l'étape (S1), on fournit un certain nombre d'autres premiers ensembles de données (1010), dont chacun est associé à un dispositif de surveillance de processus, à l'étape (S2), pour chaque premier ensemble de données (1010) on associe une valeur d'indicateur de qualité ($R_i$) à chacune des sections transversales d'objet dans la pluralité de couches successives, et à l'étape (S3), une pluralité de deuxièmes ensembles de données (1020) est générée sur la base des associations de l'étape (S2) et à l'étape (S4), pour déterminer un indicateur de qualité (Q) pour un objet, une valeur d'indicateur de qualité individuelle (EQ) est d'abord déterminée pour chaque deuxième ensemble de données et une valeur d'indicateur de qualité (Q) est déterminée à l'aide des valeurs d'indicateur de qualité individuelles (EQ), de préférence en associant des facteurs de pondération aux valeurs d'indicateur de qualité individuelles (EQ).

**9.** Le procédé selon l'une quelconque des revendications 1 à 7, dans lequel, à l'étape (S1), une pluralité de premiers ensembles de données (1010) sont mis à disposition, dont chacun est associé à un dispositif de surveillance de processus, à l'étape (S2), pour chaque premier ensemble de données (1010), une valeur d'indicateur de qualité ($R_i$) est respectivement associée aux sections transversales d'objets dans les plusieurs couches successives, à l'étape (S3), une pluralité de deuxièmes ensembles de données (1020) est générée sur la base des associations de l'étape (S2) et à l'étape (S4), pour déterminer un indicateur de qualité (Q) pour un objet, une valeur d'indicateur de qualité globale est d'abord déterminée pour une section transversale d'objet dans une couche sur la base de la pluralité de deuxièmes ensembles de données (1020), de préférence en associant des facteurs de pondération aux différentes valeurs d'indicateur de qualité ($R_i$) associées à une section transversale d'objet, et en déterminant ensuite l'indicateur de qualité (Q) pour l'objet sur la base des valeurs d'indicateur de qualité globales déterminées.

**10.** Le procédé selon l'une des revendications 1 à 9, dans lequel une valeur d'indicateur de qualité associée à une section transversale d'objet dans une couche ou une valeur d'indicateur de qualité globale est remplacée par une valeur d'indicateur de qualité ou une valeur d'indicateur de qualité globale indiquant une qualité supérieure, si une valeur d'indicateur de qualité ou une valeur d'indicateur de qualité globale indiquant une qualité supérieure est associée aux sections transversales d'objet associées à cet objet dans au moins n couches suivantes, de préférence n couches immédiatement suivantes, n étant un nombre naturel prédéfini.

**11.** Le procédé selon l'une quelconque des revendications 1 à 10, dans lequel on détermine si un objet présente une qualité acceptable de la manière suivante :

déterminer une valeur limite d'indicateur de qualité (Z) et comparer les valeurs d'indicateur de qualité ou les valeurs d'indicateur de qualité globales pour les sections transversales de l'objet dans les différentes couches avec la valeur limite d'indicateur de qualité (Z),
évaluer la qualité de l'objet comme acceptable uniquement si aucune des valeurs d'indicateur de qualité ou des valeurs d'indicateur de qualité globales n'est associée à un niveau de qualité inférieur à la valeur limite d'indicateur de qualité (Z).

**12.** Le procédé selon l'une quelconque des revendications 1 à 11, dans lequel l'indicateur de qualité (Q) est un élément d'un ensemble d'indicateurs de mesure de qualité dont l'épaisseur est supérieure à un, et il existe une relation d'ordre entre les membres de l'ensemble.

**13.** Un dispositif (1000) pour déterminer un indicateur de qualité d'un objet fabriqué au moyen d'un procédé de construction générative en couches, dans lequel, dans le procédé de construction générative en couches, l'objet est fabriqué couche par couche en solidifiant un matériau de construction aux endroits correspondant à la coupe transversale de l'objet dans une couche, le dispositif comprenant au moins :

une unité de mise à disposition (1001) pour la mise à disposition d'un premier ensemble de données (1010) qui est associé à un dispositif de surveillance de processus, une information d'irrégularité de processus déterminée par le dispositif de surveillance de processus associé à l' ensemble de données étant associée dans le premier ensemble de données (1010) pour plusieurs couches successives au cours de la fabrication, en particulier pour des couches successives directement, à un nombre prédéfini d'endroits consolidés d'une couche,
une unité de détermination (1002) qui est conçue pour déterminer une fréquence relative de la présence d'une irrégularité de processus dans une couche pour les plusieurs couches successives et pour associer une valeur d'indicateur de qualité ($R_i$, $S_i$) à la section transversale d'objet consolidée dans une couche en fonction de la fréquence relative déterminée,
dans lequel différentes valeurs d'indicateur de qualité ($R_i$, $S_i$) sont associées à différentes plages de valeurs des fréquences relatives qui indiquent différents niveaux de qualité, et
une unité de génération (1003) qui est conçue pour générer un deuxième ensemble de données (1020) dans lequel une valeur d'indicateur de qualité ($R_i$, $S_i$) est associée à la section transversale d'objet dans chacune des plusieurs couches successives, et
une unité de détermination (1004) pour déterminer un indicateur de qualité (Q) indiquant la qualité de l'objet fabriqué en utilisant le deuxième ensemble de données (1020).

**14.** Un dispositif de surveillance de processus (101) pour déterminer la présence d'irrégularités de processus dans un processus de construction générative en couches, dans lequel les objets sont fabriqués couche par couche en solidifiant un matériau de construction aux endroits correspondant à la section transversale d'un objet dans une couche, le dispositif de surveillance de processus comprenant un dispositif selon la revendication 13 et comprenant en outre :

une unité de détection d'irrégularité (110) adaptée pour effectuer, pour un nombre prédéfini d'endroits d'une couche balayés par un rayonnement énergétique, une détection d'irrégularité de la présence d'une irrégularité de processus par rapport à au moins un paramètre de processus lors de la fabrication, l'unité de détection d'irrégularité (110) étant de préférence une unité de surveillance de couche et/ou une unité de surveillance de bain de fusion à base de photodiodes et/ou une unité de tomographie optique, et
une unité de documentation d'irrégularité de processus (111) qui est conçue pour générer un premier ensemble de données (1010) dans lequel, pour plusieurs couches successives, de préférence pour toutes les couches, une information d'irrégularité de processus est associée respectivement à un nombre prédéfini d'endroits d'une couche balayés par le rayonnement énergétique, ladite information indiquant si une irrégularité de processus est apparue à cet endroit lors de la solidification du matériau de construction.

**15.** Un dispositif pour la fabrication d'au moins un objet tridimensionnel au moyen d'un procédé de construction générative en couches, les objets étant fabriqués couche par couche dans le procédé de construction générative en couches en solidifiant un matériau de construction aux endroits correspondant à la section transversale d'un objet dans une couche, comprenant :

une unité de balayage (23) pour balayer des endroits d'une couche appliquée du matériau de construction (11) correspondant à une section transversale de l'objet à fabriquer avec un rayonnement d'énergie pour consolider sélectivement le matériau de construction,

un dispositif selon la revendication 13 et/ou un dispositif de surveillance de processus selon la revendication 14.

**16.** Un programme d'ordinateur chargeable dans une unité de commande programmable et/ou un dispositif programmable, le programme comprenant des moyens de code de programme pour exécuter toutes les étapes d'un procédé selon l'une quelconque des revendications 1 à 12, lorsque le programme d'ordinateur est exécuté.

# Fig. 1

**Fig. 2**

# Fig. 3

**Fig. 4**

## Fig. 5

$\forall R_i:$

$\exists R_i > Z + 3 ?$ —Y→ $Q = \max(R_i); \quad A = 0$

↓N

$\exists R_i > Z ?$ —Y→ $\forall R_i > Z:$ $\exists \{R_{i+1}, R_{i+2}, R_{i+3}\} > Z ?$ —Y→ $Q = \max(R_i); \quad A = 0$

↓N ↓N

$Q = <R_i>; \quad A = 1$ $Q = Z; \quad A = 1$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013003937 A1
- DE 202010010771 U1
- EP 2666612 A1
- DE 102011009624 A1

**In der Beschreibung aufgeführte Nicht-Patentliteratur**

- **S. CLIJSTERS et al.** In situ quality control of the selective laser melting process using a high-speed, real-time melt pool monitoring system. *THE INTERNATIONAL JOURNAL OF ADVANCED MANUFACTURING TECHNOLOGY,* 10. August 2014, vol. 75 (5-8), 1089-1101
- **THOMAS REINHARDT et al.** Ansätze zur Qualitätsbewertung von generativen Fertigungsverfahren durch die Einführung eine Kennzahlensystems. *RTejournal,* Januar 2012, 1-9
- Surface texture metrology for metal additive manufacturing: a review. **A TOWNSEND et al.** PRECISION ENGI-NEERING. Elsevier, 07. Juni 2016, vol. 46, 34-47
- Identification of process phenomena in DMLS by optical in-process monitoring. **R. DOMRÖSE ; T. GRÜNBERGER.** Lasers in Manufacturing Conference 2015